(19) 

**Europäisches Patentamt**
**European Patent Office**
**Office européen des brevets**

(11) **EP 4 668 635 A1**

(12) **EUROPEAN PATENT APPLICATION**
published in accordance with Art. 153(4) EPC

(43) Date of publication:
**24.12.2025 Bulletin 2025/52**

(21) Application number: **23931511.2**

(22) Date of filing: **07.04.2023**

(51) International Patent Classification (IPC):
***H04L 1/1867*** *(2023.01)*

(52) Cooperative Patent Classification (CPC):
**H04L 1/1867**

(86) International application number:
**PCT/CN2023/086959**

(87) International publication number:
**WO 2024/207450 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• **GAO, Na**
  **Shenzhen, Guangdong 518129 (CN)**

• **WANG, Ting**
  **Shenzhen, Guangdong 518129 (CN)**
• **TANG, Hao**
  **Shenzhen, Guangdong 518129 (CN)**
• **DONG, Lei**
  **Shenzhen, Guangdong 518129 (CN)**
• **MA, Jianglei**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMMUNICATION METHOD AND APPARATUS**

(57) A communication method and apparatus are provided to improve repeated transmission performance. The method includes: A sending device obtains first data and second data, and sends a modulated symbol of the first data, a modulated symbol of the second data, and a modulated symbol of third data, where the modulated symbol of the third data is obtained based on the first data and the second data. The modulated symbol of the first data is mapped to a first layer, the modulated symbol of the second data corresponds to a second layer, and the modulated symbol of the third data corresponds to the first layer and the second layer; the modulated symbol of the first data corresponds to a first transmission reception point, the modulated symbol of the second data corresponds to a second transmission reception point, and the modulated symbol of the third data corresponds to the first transmission reception point and/or the second transmission reception point; or the first data corresponds to a first modulation and coding scheme, and the second data corresponds to a second modulation and coding scheme.

| Sending device | Receiving device |
|---|---|
| S101: Obtain first data and second data | |
| S102: Send a modulated symbol of the first data, a modulated symbol of the second data, and a modulated symbol of third data | |
| | S103: Receive the modulated symbol of the first data and the modulated symbol of the second data |
| | S104: Obtain the first data based on the modulated symbol of the first data, and obtain the second data based on the first data and the modulated symbol of the third data |

FIG. 12

**Description**

TECHNICAL FIELD

This application relates to the field of mobile communication technologies, and in particular, to a communication method and apparatus.

BACKGROUND

To improve reliability of data transmission, same data may be repeatedly transmitted between a terminal device and a base station in a plurality of time units. Using uplink communication as an example, repeatedly transmitted uplink data may be carried on a physical uplink shared channel (physical uplink shared channel, PUSCH). For example, in a plurality of consecutive slots, the terminal device may transmit a same PUSCH in each slot.

Currently, a receiving device separately demodulates different transmitted data blocks, and known information about a successfully decoded data block is not fully used. As a result, a demodulation success rate is low, and a bottleneck of retransmission performance is caused. How to improve data demodulation performance in a repeated transmission scenario is a problem that needs to be resolved in this application.

SUMMARY

This application provides a communication method and apparatus, to improve repeated transmission performance.

According to a first aspect, a communication method is provided. The method may be implemented by a sending device or a component in the sending device. The sending device may be a network device or a terminal device. The component in this application may include, for example, at least one of a chip, a chip system, a processor, a transceiver, a processing unit, or a transceiver unit. Using an example in which the method is performed by the sending device, the method may be implemented through the following steps: The sending device obtains first data and second data. The sending device sends a modulated symbol of the first data, a modulated symbol of the second data, and a modulated symbol of third data, where the modulated symbol of the third data is obtained based on the first data and the second data. The modulated symbol of the first data is mapped to a first layer, the modulated symbol of the second data corresponds to a second layer, the modulated symbol of the third data corresponds to the first layer and the second layer, and the first layer is different from the second layer; the modulated symbol of the first data corresponds to a first transmission reception point, the modulated symbol of the second data corresponds to a second transmission reception point, the modulated symbol of the third data corresponds to the first transmission reception point and/or the second transmission reception point, and the first transmission reception point is different from the second transmission reception point; or the first data corresponds to a first modulation and coding scheme, the second data corresponds to a second modulation and coding scheme, and the first modulation and coding scheme is different from the second modulation and coding scheme.

According to the foregoing method, the modulated symbol of the third data is a combined modulated symbol of the modulated symbol of the first data and the modulated symbol of the second data, and the modulated symbol of the third data may assist in obtaining the first data or the second data through demodulation and decoding, to improve repeated transmission performance. Because the first data and the second data correspond to different layers, transmission reception points, or modulation and coding schemes, transmission reliability of the first data and the second data is different, and there is a higher probability that one of the first data and the second data is successfully received and the other fails to be received. Repeated transmission performance in these communication scenarios can be improved through multiplexed modulation-based transmission.

In a possible implementation, the modulated symbol of the third data corresponds to at least one multiplexed modulation constellation diagram, and bits corresponding to each multiplexed modulation constellation diagram are from the first data and the second data.

According to this implementation, the modulated symbol of the third data is obtained based on the multiplexed modulation constellation diagram. When the first data or the second data is known, a Euclidean distance between constellation points in the multiplexed modulation constellation diagram is large, so that a decoding success rate of a receiving end may be increased, and a signal-to-noise ratio for decoding may be decreased.

In a possible implementation, the sending device may further send or receive first information, where the first information indicates a correspondence between the modulated symbol of the first data and the first layer, and/or the first information indicates a correspondence between the modulated symbol of the second data and the second layer.

According to this implementation, the sending device and a receiving device may negotiate or determine, by using the first information, the layers at which the modulated symbol of the first data and the modulated symbol of the second data are respectively located, to improve a receiving success rate.

In a possible implementation, the sending device may further send second information, where the second information indicates a reliability order of a plurality of modulated symbol strings of the first data, and/or the second information indicates a reliability order of a plurality of modulated symbol strings of the second data.

According to this implementation, the sending device and the receiving device may negotiate or determine, by using the second information, the reliability order of the plurality of modulated symbol strings of the first data and/or the reliability order of the plurality of modulated symbol strings of the second data. Using the first data as an example, when the plurality of modulated symbol strings of the first data correspond to a plurality of layers, a sending end and the receiving end may determine, based on reliability of the plurality of modulated symbol strings of the first data, the layers corresponding to the plurality of modulated symbol strings, to improve the receiving success rate. For example, the layers corresponding to the plurality of modulated symbol strings all belong to the first layer.

In a possible implementation, reliability of a first modulated symbol string is higher than reliability of a second modulated symbol string, and reliability of a layer corresponding to the first modulated symbol string is higher than or equal to reliability of a layer corresponding to the second modulated symbol string, where the first modulated symbol string and the second modulated symbol string meet at least one of the following: the first data includes a bit corresponding to the first modulated symbol string, and the second data includes a bit corresponding to the second modulated symbol string; the first data includes a bit corresponding to the first modulated symbol string and at least one bit in a bit corresponding to the second modulated symbol string; or the second data includes at least one bit in a bit corresponding to the first modulated symbol string and a bit corresponding to the second modulated symbol string.

According to this implementation, when the modulated symbol of the first data and/or the modulated symbol of the second data include/includes a plurality of modulated symbol strings, layers to which the plurality of modulated symbol strings are mapped may be determined based on reliability of the modulated symbol strings and reliability of the layers, where higher reliability of a modulated symbol string indicates higher reliability of a layer to which the modulated symbol string is mapped, so that transmission reliability is improved.

In a possible implementation, to accurately determine reliability of the modulated symbol, the reliability of the modulated symbol string may be determined based on at least one of the following: a column weight that is of a parity-check matrix of channel coding and that is for a bit corresponding to the modulated symbol, bit channel reliability of channel coding, a bit error probability of channel coding.

In a possible implementation, to accurately determine the reliability of the layer, the reliability of the layer is determined based on channel quality of the layer.

In a possible implementation, reliability of the first layer is higher than reliability of the second layer, and/or an index of the first layer is less than an index of the second layer.

In a possible implementation, the first layer includes at least one layer, and/or the second layer includes at least one layer.

In a possible implementation, the sending device may further send or receive third information, where the third information indicates that the modulated symbol of the third data corresponds to the first transmission reception point and the second transmission reception point.

According to this implementation, when the modulated symbol of the third data corresponds to the first transmission reception point and the second transmission reception point, the sending device and a receiving device may negotiate or determine, by using the third information, to send the modulated symbol of the third data through the first transmission reception point and the second transmission reception point, to improve a receiving success rate and reduce receiving overheads.

In a possible implementation, one of the modulated symbol of the first data and the modulated symbol of the second data is sent, where the modulated symbol of the third data corresponds to the first transmission reception point, and the one of the modulated symbol of the first data and the modulated symbol of the second data corresponds to the second transmission reception point; or the modulated symbol of the third data corresponds to the second transmission reception point, and the one of the modulated symbol of the first data and the modulated symbol of the second data corresponds to the first transmission reception point.

According to this implementation, when the modulated symbol of the third data corresponds to one of the first transmission reception point and the second transmission reception point, the sending device may further send the modulated symbol of the first data or the second data through the other transmission reception point, to improve the repeated transmission performance.

In a possible implementation, the sending device may further send or receive fourth information, where the fourth information indicates that the modulated symbol of the third data corresponds to the first transmission reception point, and the one of the modulated symbol of the first data and the modulated symbol of the second data corresponds to the second transmission reception point; or the fourth information indicates that the modulated symbol of the third data corresponds to the second transmission reception point, and the one of the modulated symbol of the first data and the modulated symbol of the second data corresponds to the first transmission reception point.

According to this implementation, the sending device and a receiving device may negotiate or determine, by using the fourth information, to send the modulated symbol of the third data through the first transmission reception point or the second transmission reception point and send the modulated symbol of the first data or the second data through the other transmission reception point, to improve a receiving success rate and reduce receiving overheads.

In a possible implementation, the sending device may further send or receive fifth information, where the fifth information indicates a time domain resource and/or a frequency domain resource for one of the first data and the second data; and/or the sending device may send or receive sixth information, where the sixth information indicates a time domain resource and/or a frequency domain resource for the third data.

According to this implementation, the sending device and the receiving device may negotiate or determine the time-frequency resource for the one of the first data and the second data by using the fifth information, and/or negotiate or determine the time-frequency resource for the third data by using the sixth information. Because a size of the time-frequency resource for sending the third data may be different from a size of the time-frequency resource for sending the one of the first data and the second data, when the third data and the first data or the second data are separately sent through two transmission reception points during one time of repeated transmission, the network device may separately indicate the time-frequency resources for the third data and the first data or the second data, to improve transmission reliability.

In a possible implementation, the sending device may further send or receive seventh information, where the seventh information indicates the first modulation and coding scheme; and/or the sending device may send or receive eighth information, where the eighth information indicates the second modulation and coding scheme.

According to this implementation, the sending device and a receiving device may negotiate or determine, by using the seventh information, to process the first data by using the first modulation and coding scheme and process the second data by using the second modulation and coding scheme, to improve a receiving success rate and reduce receiving overheads.

In a possible implementation, the seventh information includes information about a modulation and coding scheme table and/or an index of the first modulation and coding scheme in the modulation and coding scheme table, and the eighth information includes information about a modulation and coding scheme table and/or an index of the second modulation and coding scheme in the modulation and coding scheme table.

In a possible implementation, the first modulation and coding scheme and the second modulation and coding scheme belong to the same modulation and coding scheme table, and the index of the first modulation and coding scheme is different from the index of the second modulation and coding scheme; or the first modulation and coding scheme and the second modulation and coding scheme belong to the same modulation and coding scheme table, and the first modulation and coding scheme and the second modulation and coding scheme correspond to the same index.

According to this implementation, the first modulation and coding scheme and the second modulation and coding scheme may be indicated by one or two indexes in the same table, so that the first modulation and coding scheme and the second modulation and coding scheme are flexibly indicated, to reduce indication overheads.

According to a second aspect, a communication method is provided. The method may be implemented by a receiving device of data or a component in the receiving device. The receiving device may be a network device or a terminal device. The component in this application may include, for example, at least one of a chip, a chip system, a processor, a transceiver, a processing unit, or a transceiver unit. Using an example in which the method is performed by the network device, the method may be implemented through the following steps: The receiving device receives a modulated symbol of first data and a modulated symbol of third data, where the modulated symbol of the third data is obtained based on the first data and second data. The receiving device may further obtain the first data based on the modulated symbol of the first data. The receiving device may further obtain the second data based on the modulated symbol of the third data and the first data. The modulated symbol of the first data is mapped to a first layer, a modulated symbol of the second data corresponds to a second layer, the modulated symbol of the third data corresponds to the first layer and the second layer, and the first layer is different from the second layer; the modulated symbol of the first data corresponds to a first transmission reception point, a modulated symbol of the second data corresponds to a second transmission reception point, the modulated symbol of the third data corresponds to the first transmission reception point and/or the second transmission reception point, and the first transmission reception point is different from the second transmission reception point; or the first data corresponds to a first modulation and coding scheme, the second data corresponds to a second modulation and coding scheme, and the first modulation and coding scheme is different from the second modulation and coding scheme.

In a possible implementation, the receiving device may further receive the modulated symbol of the second data, and determine that the modulated symbol of the second data fails to be demodulated and/or decoded. Therefore, when the modulated symbol of the second data fails and/or fails to be decoded, the second data may be obtained based on the modulated symbol of the first data and the modulated symbol of the third data.

In a possible implementation, the modulated symbol of the third data corresponds to at least one multiplexed modulation constellation diagram, and bits corresponding to each multiplexed modulation constellation diagram are from the first data and the second data.

In a possible implementation, the receiving device may further receive or send first information, where the first information indicates a correspondence between the modulated symbol of the first data and the first layer, and/or the first information indicates a correspondence between the modulated symbol of the second data and the second layer.

In a possible implementation, the receiving device may further send second information, where the second information indicates a reliability order of a plurality of modulated symbols of the first data, and/or the second information indicates a reliability order of a plurality of modulated symbols of the second data.

In a possible implementation, reliability of a first modulated symbol string is higher than reliability of a second modulated symbol string, and reliability of a layer corresponding to the first modulated symbol string is higher than or equal to reliability of a layer corresponding to the second modulated symbol string, where the first modulated symbol string and the second modulated symbol string meet at least one of the following: the first data includes a bit corresponding to the first modulated symbol string, and the second data includes a bit corresponding to the second modulated symbol string; the first data includes a bit corresponding to the first modulated symbol string and at least one bit in a bit corresponding to the second modulated symbol string; or the second data includes at least one bit in a bit corresponding to the first modulated symbol string and a bit corresponding to the second modulated symbol string.

In a possible implementation, the reliability of the modulated symbol string is determined based on at least one of the following: a column weight that is of a parity-check matrix of channel coding and that is for a bit corresponding to a modulated symbol, bit channel reliability of channel coding, a bit error probability of channel coding.

In a possible implementation, the reliability of the layer is determined based on channel quality of the layer.

In a possible implementation, reliability of the first layer is higher than reliability of the second layer, and/or an index of the first layer is less than an index of the second layer.

In a possible implementation, the first layer includes at least one layer, and/or the second layer includes at least one layer.

In a possible implementation, the receiving device may further receive or send third information, where the third information indicates that the third data corresponds to the first transmission reception point and the second transmission reception point.

In a possible implementation, the receiving device may further receive one of the first data and the second data, where the third data corresponds to the first transmission reception point, and the one of the first data and the second data corresponds to the second transmission reception point; or the third data corresponds to the second transmission reception point, and the one of the first data and the second data corresponds to the first transmission reception point.

In a possible implementation, the receiving device may further receive or send fourth information, where the fourth information indicates that the third data corresponds to the first transmission reception point, and the one of the first data and the second data corresponds to the second transmission reception point; or the fourth information indicates that the third data corresponds to the second transmission reception point, and the one of the first data and the second data corresponds to the first transmission reception point.

In a possible implementation, the receiving device may further receive or send fifth information, where the fifth information indicates a time domain resource and/or a frequency domain resource for the one of the first data and the second data; and/or the receiving device may receive or send sixth information, where the sixth information indicates a time domain resource and/or a frequency domain resource for the third data.

In a possible implementation, the seventh information includes information about a modulation and coding scheme table and/or an index of the first modulation and coding scheme in the modulation and coding scheme table; and the eighth information includes information about a modulation and coding scheme table and/or an index of the second modulation and coding scheme in the modulation and coding scheme table.

In a possible implementation, the seventh information includes at least one of the following: information about a modulation and coding scheme table or an index of the first modulation and coding scheme in the modulation and coding scheme table; and the eighth information includes at least one of the following: information about a modulation and coding scheme table or an index of the second modulation and coding scheme in the modulation and coding scheme table.

In a possible implementation, the first modulation and coding scheme and the second modulation and coding scheme belong to the same modulation and coding scheme table, and the index of the first modulation and coding scheme is different from the index of the second modulation and coding scheme; or the first modulation and coding scheme and the second modulation and coding scheme belong to the same modulation and coding scheme table, and the first modulation and coding scheme and the second modulation and coding scheme correspond to the same index.

According to a third aspect, a communication apparatus is provided. The apparatus may implement the method according to the first aspect or the second aspect and any possible design of the first aspect or the second aspect. The apparatus has functions of the sending device or the receiving device above. The apparatus is, for example, a terminal device, a functional module in the terminal device, a network device, or a functional module in the network device.

In an optional implementation, the apparatus may include modules that perform and that are in one-to-one correspondence with the method/operations/steps/actions described in the first aspect or the second aspect. The module may be a hardware circuit, may be software, or may be implemented by a combination of a hardware circuit and software. In an optional implementation, the apparatus includes a processing unit (sometimes also referred to as a processing module) and a communication unit (sometimes also referred to as a transceiver module, a communication module, or the like). A transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as the transceiver unit, and the functional module can implement the sending function and the receiving function. Alternatively, the sending unit and the receiving unit may be different functional modules, and the transceiver unit is a general term for these functional modules.

For example, when the apparatus is configured to perform the method described in the first aspect or the second aspect, the apparatus may include the communication unit and the processing unit respectively configured to implement receiving and sending actions and an action other than the receiving and sending actions.

According to a fourth aspect, an embodiment of this application further provides a communication apparatus, including a processor configured to execute a computer program (or computer-executable instructions) stored in a memory. When the computer program (or the computer-executable instructions) is executed, the apparatus is enabled to perform the method according to the first aspect or the second aspect and the possible implementations of the first aspect or the second aspect.

In a possible implementation, the processor and the memory are integrated together.

In another possible implementation, the memory is located outside the communication apparatus.

The communication apparatus further includes a communication interface. The communication interface is for communication between the communication apparatus and another device, for example, for data and/or signal sending or receiving. For example, the communication interface may be a transceiver, a circuit, a bus, a module, or another type of communication interface.

According to a fifth aspect, a computer-readable storage medium is provided. The computer-readable storage medium is configured to store a computer program or instructions. When the computer program or the instructions are run, the method according to the first aspect or the second aspect and any possible implementation of the first aspect or the second aspect is implemented.

According to a sixth aspect, a computer program product including instructions is provided. When the computer program product runs on a computer, the method according to the first aspect or the second aspect and any possible implementation of the first aspect or the second aspect is implemented.

According to a seventh aspect, an embodiment of this application further provides a communication apparatus, configured to perform the method according to the first aspect or the second aspect and the possible implementations of the first aspect or the second aspect.

According to an eighth aspect, a chip system is provided. The chip system includes a logic circuit (which may alternatively be understood as that the chip system includes a processor, and the processor may include a logic circuit and the like), and may further include an input/output interface. The input/output interface may be configured to input a message, and may also be configured to output a message. The input/output interface may be a same interface, that is, the same interface can implement both a sending function and a receiving function. Alternatively, the input/output interface includes an input interface and an output interface. The input interface is configured to implement a receiving function, that is, configured to receive a message. The output interface is configured to implement a sending function, that is, configured to send a message. The logic circuit may be configured to perform an operation other than the sending and receiving functions in the method according to the first aspect or the second aspect and any possible implementation of the first aspect or the second aspect. The logic circuit may be further configured to transmit a message to the input/output interface, or receive, from the input/output interface, a message from another communication apparatus. The chip system may be configured to implement the method according to the first aspect or the second aspect and any possible implementation of the first aspect or the second aspect. The chip system may include a chip, or may include a chip and another discrete component.

Optionally, the chip system may further include a memory, and the memory may be configured to store instructions. The logic circuit may invoke the instructions stored in the memory, to implement a corresponding function.

According to a ninth aspect, a communication system is provided. The communication system may include a sending device (or apparatus) and a receiving device (or apparatus). The sending device may be configured to perform the method according to the first aspect and any possible implementation of the first aspect, and the receiving device may be configured to perform the method according to the second aspect and any possible implementation of the second aspect.

For technical effects brought by the second aspect to the ninth aspect, refer to the descriptions in the first aspect. Details are not described herein again.

BRIEF DESCRIPTION OF DRAWINGS

FIG. 1 is a diagram of an architecture of a wireless communication system according to this application;

FIG. 2 is a diagram of a wireless communication process;

FIG. 3 is a schematic of constellation diagrams;

FIG. 4 is a schematic of a Gray constellation diagram;

FIG. 5 is a time domain diagram of a blind retransmission process;

FIG. 6 is a time domain diagram of another blind retransmission process;

FIG. 7 is a time domain diagram of a multiplexed modulation-based transmission process according to an embodiment of this application;

FIG. 8 is a schematic of a multiplexed modulation constellation diagram according to an embodiment of this application;

FIG. 9 is a schematic of another multiplexed modulation constellation diagram according to an embodiment of this application;

FIG. 10 is a schematic of another multiplexed modulation constellation diagram according to an embodiment of this application;

FIG. 11 is a diagram of a mapping relationship of layer mapping;

FIG. 12 shows a communication method according to an embodiment of this application;

FIG. 13 is a time domain diagram of a repeated transmission scheme according to an embodiment of this application;

FIG. 14 is a diagram of a layer mapping-based repeated transmission scheme according to an embodiment of this application;

FIG. 15 is a diagram of a repeated transmission scheme using a plurality of transmission reception points according to an embodiment of this application;

FIG. 16 is a diagram of a structure of a communication apparatus according to an embodiment of this application;

FIG. 17 is a diagram of a structure of another communication apparatus according to an embodiment of this application; and

FIG. 18 is a diagram of a structure of another communication apparatus according to an embodiment of this application.

## DESCRIPTION OF EMBODIMENTS

Embodiments of this application provide a communication method and apparatus. The method and the apparatus are based on a same inventive concept. Because the method and the apparatus have similar problem-resolving principles, for implementations of the apparatus and the method, refer to each other, and no repeated description is provided. In descriptions of embodiments of this application, the term "and/or" describes an association relationship between associated objects and indicates that three relationships may exist. For example, A and/or B may indicate the following three cases: Only A exists, both A and B exist, and only B exists. The character "/" generally indicates an "or" relationship between associated objects. In this application, "at least one" means one or more, and "a plurality of" means two or more. In addition, it should be understood that in the descriptions of this application, terms such as "first" and "second" are merely for distinguishing and description, but should not be understood as indicating or implying relative importance or a sequence.

The method provided in embodiments of this application may be applied to a narrowband-Internet of things (narrowband-Internet of things, NB-IoT) system, a global system for mobile communications (global system for mobile communications, GSM), an enhanced data rates for GSM evolution (enhanced data rates for GSM evolution, EDGE) system, a wideband code division multiple address (wideband code division multiple address, WCDMA) system, a code division multiple address 2000 (code division multiple address 2000, CDMA2000) system, a time division-synchronous code division multiple access (time division-synchronous code division multiple access, TD-SCDMA) system, or a 4th generation (4th generation, 4G) communication system (for example, a long term evolution (long term evolution, LTE) communication system), may be applied to a 5th generation (5th generation, 5G) communication system, for example, a 5G new radio (new radio, NR) communication system, or may be applied to various future communication systems, for example, a 6th generation (6th generation, 6G) communication system. In addition, this application may also be applied to a wireless projection scenario, an extended reality (extended reality, XR) scenario, a scenario of data encoding and decoding of a terminal device, for example, a mobile phone, or the like. The extended reality includes but is not limited to an augmented reality (augmented reality, AR) technology, a virtual reality (virtual reality, VR) technology, a mixed reality (mixed reality, MR) technology, or the like. The method provided in embodiments of this application may be further applied to an integrated access and backhaul (integrated access and backhaul, IAB) scenario.

The method provided in embodiments of this application may be further applied to a Bluetooth system, a wireless fidelity (wireless fidelity, Wi-Fi) system, a long range radio (long range radio, LoRa) system, or an Internet of vehicles system. The method provided in embodiments of this application may be further applied to a satellite communication system. The satellite communication system may be integrated with the foregoing communication system. It may be understood that the buffer status report determining method provided in embodiments of this application may be applied to other communication systems.

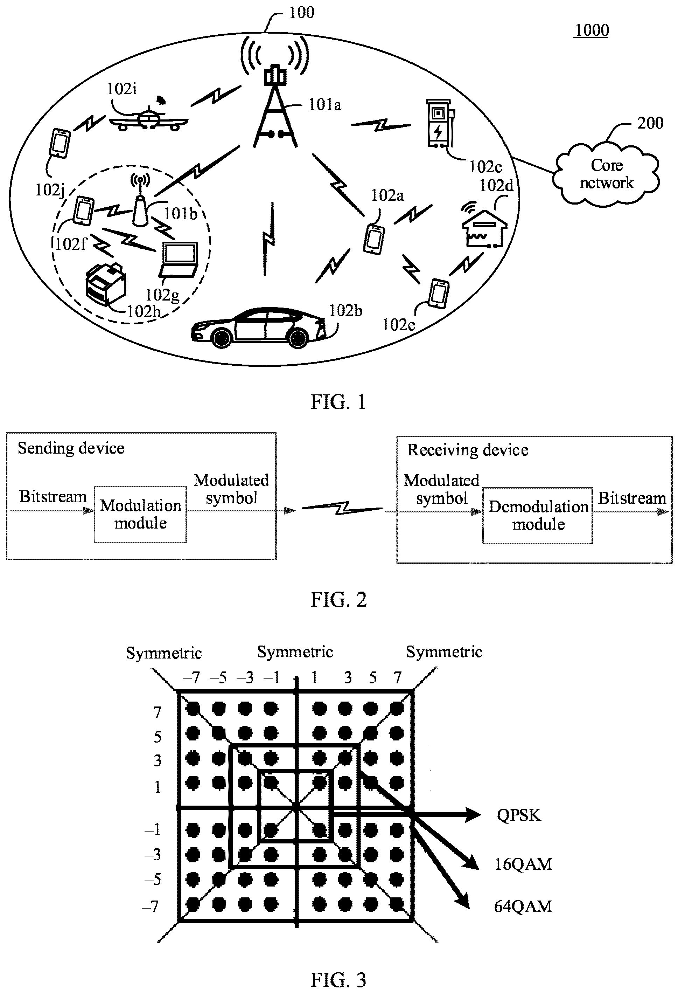

For ease of understanding of embodiments of this application, an application scenario to which this application is applicable is described by using an architecture of a communication system shown in FIG. 1 as an example. FIG. 1 is a diagram of a possible and non-limiting system. As shown in FIG. 1, the communication system 1000 includes a radio access network (radio access network, RAN) 100 and a core network (core network, CN) 200. The RAN 100 includes at least one network device (101a and 101b in FIG. 1, collectively referred to as a network device 101) and at least one terminal (102a to 102j in FIG. 1, collectively referred to as a terminal 102). The RAN 100 may further include another RAN node, for example, a wireless relay device and/or a wireless backhaul device (not shown in FIG. 1). The terminal 102 is connected to the network device 101 in a wireless manner. The network device 101 is connected to the core network 200 in a wireless or wired manner. A core network device in the core network 200 and the network device 101 in the RAN 100 may be different physical devices, or may be a same physical device that integrates a logical function of the core network and a logical function of the radio access network.

The RAN 100 may be a 3rd generation partnership project (3rd generation partnership project, 3GPP)-related cellular system, for example, a 4G mobile communication system, a 5G mobile communication system, or a system evolving after 5G (for example, a 6G mobile communication system). Alternatively, the RAN 100 may be an open access radio network (open RAN, ORAN/O-RAN), a cloud radio access network (cloud radio access network, CRAN), or a wireless fidelity (wireless fidelity, Wi-Fi) system. The RAN 100 may alternatively be a communication system that integrates the foregoing two or more systems.

The apparatus provided in embodiments of this application may be used in the network device 101 or the terminal 102. It may be understood that FIG. 1 shows only a possible architecture of the communication system to which embodiments of this application may be applied. In another possible scenario, the architecture of the communication system may alternatively include another device.

The network device 101 is a node in the RAN, and may also be referred to as an access network device and a RAN node (or device). The network device 101 is configured to assist the terminal in implementing radio access. A plurality of network devices 101 in the communication system 1000 may be nodes of a same type, or may be nodes of different types. In some scenarios, roles of the network device 101 and the terminal 102 are relative. For example, the network element 102i in FIG. 1 may be a helicopter or an uncrewed aerial vehicle, and may be configured as a mobile base station. For the terminal 102j that accesses the RAN 100 via the network element 102i, the network element 102i is a base station. However, for the base station 101a, the network element 102i is a terminal. The network device 101 and the terminal 102 are sometimes both referred to as communication apparatuses. For example, the network elements 101a and 101b in FIG. 1 may be understood as communication apparatuses having functions of a base station, and the network elements 102a to 102j may be understood as communication apparatuses having functions of a terminal.

In a possible scenario, the network device may be a base station (base station), an evolved NodeB (evolved NodeB, eNodeB) in 4G, an access point (access point, AP), a transmission reception point (transmission reception point, TRP), a next generation NodeB (next generation NodeB, gNB) in 5G, a base station in the 6th generation (6th generation, 6G) mobile communication system, a base station in a future mobile communication system, a satellite, an access node in the Wi-Fi system, or the like. The network device may be a macro base station (for example, 110a in FIG. 1), a micro base station or an indoor base station (for example, 110b in FIG. 1), a relay node or a donor node, or a radio controller in a CRAN scenario. Alternatively, the network device may be a device that functions as a base station in device-to-device (device to device, D2D) communication, Internet of vehicles communication, or machine type communication. Optionally, the network device may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, a plurality of network devices collaborate to assist the terminal in implementing radio access, and different network devices respectively implement a part of functions of a base station. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in the access network RAN, or the CU may be classified as a network device in the core network CN. This is not limited herein.

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal 102 may also be referred to as user equipment (user equipment, UE), a mobile station (mobile station, MS), a mobile terminal (mobile terminal, MT), or the like, and is a device that provides a user with voice or data connectivity, or may be an Internet of things device. For example, the terminal device includes a handheld device, a vehicle-mounted device, or the like that has a wireless connection function. Currently, the terminal device may be a mobile phone, a tablet computer, a notebook computer, a palmtop computer, a mobile Internet device (mobile Internet device, MID), a wearable device (for example, a smartwatch, a smart band, or a pedometer), a vehicle-mounted device (for example, a car, a bicycle, an electric vehicle, an airplane, a ship, a train, or a high-speed rail), a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, or an electric meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The terminal device may alternatively be another device having functions of a terminal. For example, the terminal device may alternatively be a device that functions as a terminal in D2D communication. A terminal device having a wireless transceiver function and a chip that may be disposed in the terminal device are collectively referred to as the terminal device in this application. A device form of the terminal is not limited in embodiments of this application.

The following describes some terms in embodiments of this application, to facilitate understanding of a person skilled in the art.

(1) Modulation

The modulation is modulation performed by a modulation module on a bitstream, namely, modulation of the bitstream into a symbol suitable for transmission on an actual channel.

In the field of wireless communication, a baseband signal needs to be frequency-modulated to a higher frequency by using a modulation technology before being transmitted on an actual channel, to resist attenuation caused by the actual channel. Therefore, as shown in FIG. 2, a process in which a sending device sends information to a receiving device includes: The sending device modulates a bitstream that needs to be actually transmitted, so that a modulated signal (referred to as a modulated symbol) is suitable for transmission. The receiving device demodulates (an inverse process of the modulation) the received signal that passes through the actual channel, to obtain the bitstream that needs to be transmitted by the sending device.

Constellation mapping is a digital modulation mode. In the constellation mapping, a bit sequence (or a bitstream) that carries information is mapped, by using a constellation diagram, to a symbol sequence suitable for transmission on an actual channel. Specifically, in the constellation mapping technology, the bitstream is mapped to a point on a complex plane. The complex plane is the constellation diagram, and represents a complex number set including all values of a symbol outputted through the constellation mapping. Each constellation point in the constellation diagram corresponds to one value of the outputted symbol. The point on the complex plane has a higher frequency, and is suitable for transmission on the actual channel.

Currently, most common constellation diagrams include a pulse amplitude modulation (pulse amplitude modulation, PAM) constellation diagram in one-dimensional real-number space, a quadrature amplitude modulation (quadrature amplitude modulation, QAM) constellation diagram in two-dimensional real-number space, a phase shift keying (phase shift keying, PSK) modulation constellation diagram, and the like.

When constellation mapping is performed on a bitstream, every n bits (bits) in the bitstream may be mapped to one constellation point, in other words, one constellation point represents an n-bit bitstream, where n is referred to as a modulation order. Using the QAM constellation diagram as an example, different modulation orders n correspond to different QAM constellation diagrams, to be specific, quantities of constellation points in the constellation diagrams are different. Generally, when the modulation order is n, a quantity of constellation points in a corresponding constellation diagram is $Y=2^n$. The following provides several examples:

1. If the modulation order n=2, the quantity of constellation points in the constellation diagram is $Y=2^2 = 4$. That is, every 2 bits in the bitstream are mapped to one constellation point, in other words, one constellation point represents a 2-bit bitstream. For example, the constellation diagram is a quadrature phase shift keying (quadrature phase shift keying, QPSK) constellation diagram.

2. If the modulation order n=4, the quantity of constellation points in the constellation diagram is $Y=2^4 = 16$. That is, every 4 bits in the bitstream are mapped to one constellation point, in other words, one constellation point represents a 4-bit bitstream. For example, the constellation diagram is a 16QAM constellation diagram, and includes 16 constellation points.

3. If the modulation order n=6, the quantity of constellation points in the constellation diagram is $Y=2^6 = 64$. That is, every 6 bits in the bitstream are mapped to one constellation point, in other words, one constellation point represents a 6-bit bitstream. For example, the constellation diagram is a 64QAM constellation diagram, and includes 64 constellation points.

5. If the modulation order n=8, the quantity of constellation points in the constellation diagram is $Y=2^8 = 256$. That is, every 8 bits in the bitstream are mapped to one constellation point, in other words, one constellation point represents an 8-bit bitstream.

6. If the modulation order n=10, the quantity of constellation points in the constellation diagram is $Y=2^{10} = 1024$. That is, every 10 bits in the bitstream are mapped to one constellation point, in other words, one constellation point represents a 10-bit bitstream.

FIG. 3 is a diagram of a plurality of constellation diagrams. The QPSK constellation diagram includes four constellation points (shown by dots in the figure), the 16QAM constellation diagram includes 16 constellation points, the 64QAM constellation diagram includes 64 constellation points, and constellation points in each constellation diagram are evenly distributed.

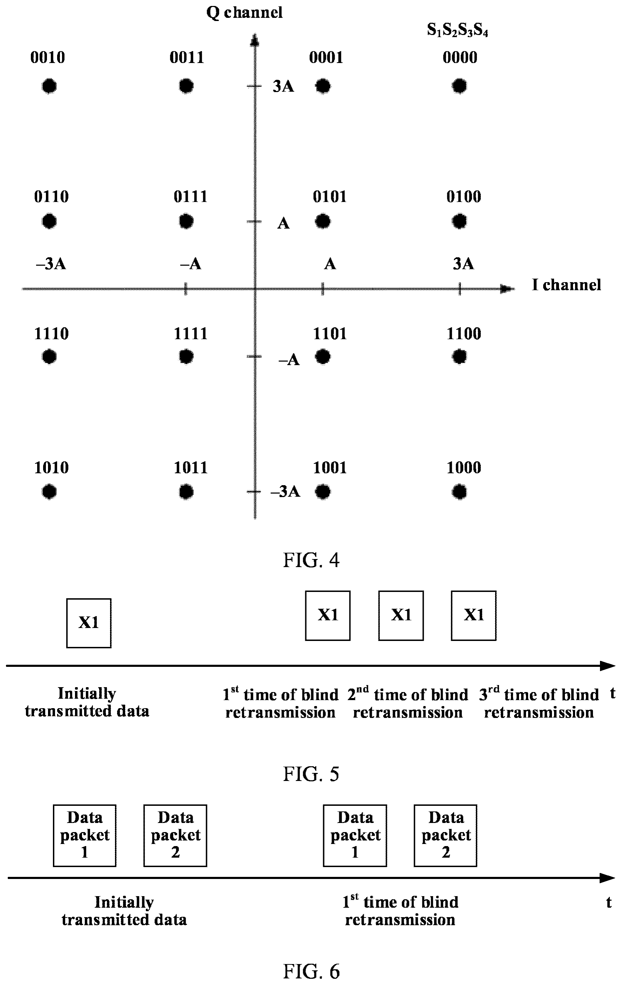

FIG. 4 is a schematic of a Gray (Gray) constellation diagram. Constellation diagrams used in LTE and 5G NR are all Gray-mapped constellation diagrams. In FIG. 4, the 16QAM constellation diagram is used as an example for description. In FIG. 4, 4 bits corresponding to any constellation point differ by only 1 bit from 4 bits corresponding to any one or more of four adjacent points, namely, a left point, a right point, an upper point, and a lower point. Therefore, good data transmission reliability can be achieved by using the Gray-mapped constellation diagram.

(2) Modulated symbol

The modulated symbol is an outputted symbol obtained by a modulation module by modulating a bitstream.

A value of the modulated symbol is a point on a complex plane. Assuming that a horizontal axis of the complex plane is a real part and a vertical axis is an imaginary part, coordinates of the point may be represented as (a+bi), a modulus value of a vector (a vector from a center of the complex plane to the point) corresponding to the point is $\sqrt[2]{a^2 + b^2}$, and a phase is arctan(b/a).

It should be noted that an outputted signal obtained by the modulation module by modulating the bitstream is merely referred to as the modulated symbol in this specification, and may also be referred to as a modulated signal or another name. This is not limited in embodiments of this application.

(3) Demodulation

After a sending device modulates a bitstream to obtain a modulated symbol, the modulated symbol is transmitted on an actual channel. A receiving device performs signal detection on the actual channel. When detecting a signal, the receiving device demodulates the signal to obtain the bitstream. The bitstream is a signal that includes information and that needs to be sent by the sending device, for example, a voice data packet or text information in the foregoing example. It should be noted that the process is an inverse process of signal modulation, namely, recovering the bitstream from the modulated symbol.

(4) Blind retransmission

The blind retransmission is a data retransmission mode. To be specific, a sending device only needs to repeatedly send data on a repeated transmission resource without waiting for an acknowledgment (acknowledgment, ACK) or a negative acknowledgment (negative acknowledgment, NACK) of a receiving device.

As shown in FIG. 5, X1 represents initially transmitted data. In the blind retransmission mode, the sending device only needs to repeatedly send the data X1 without waiting for an ACK or a NACK from the receiving device. If a plurality of pieces of data X1 are repeatedly transmitted, the plurality of pieces of data X1 may be carried in different time units. In this application, the time unit is a unit of time. For example, the time unit may be but is not limited to a radio frame, a subframe (subframe), a slot (slot), or a symbol (symbol). The symbol may be a time domain symbol (for example, an orthogonal frequency division multiplexing (orthogonal frequency division multiplexing, OFDM) symbol) or the like.

It may be understood that each piece of repeatedly sent X1 may correspond to one or more constellation diagrams. Using the 16QAM constellation diagram shown in FIG. 4 as an example, X1 includes a bit string $S_0S_1S_2S_3$, and the bit string may correspond to an upper-right constellation point in the constellation diagram, to be specific, the bit string is mapped to a modulated symbol by using the constellation point.

In addition, if a plurality of data packets need to be repeatedly transmitted, each repeatedly transmitted data packet may correspond to one or more constellation diagrams. Refer to FIG. 5. In an example of repeated transmission, as shown in FIG. 6, a data packet 1 and a data packet 2 are initially transmitted data. During the repeated transmission, the sending device may repeatedly send the data packet 1 and the data packet 2 for a plurality of times. In each time of repeated transmission, the sending device repeatedly sends one data packet 1 and one data packet 2, where each data packet 1 and each data packet 2 are separately modulated.

(5) Multiplexed modulation

In the multiplexed modulation, a sending device may combine a plurality of data packets that need to be sent, to obtain a new data packet, and map the new data packet by using a multiplexed modulation constellation diagram. For example, data that needs to be repeatedly transmitted includes a data packet 1 and a data packet 2, M constellation points in an M-QAM constellation diagram may represent information of N bits, N=log2(M), N/2 bits in the N bits are from the data packet 1, and the other N/2 bits are from the data packet 2. Through blind retransmission, the sending device may perform multiplexed transmission on the plurality of data packets during repeated transmission. When a receiving end has known information about a part of the data packets, this prior information may be converted into a Euclidean distance enhancement gain, to achieve better demodulation performance.

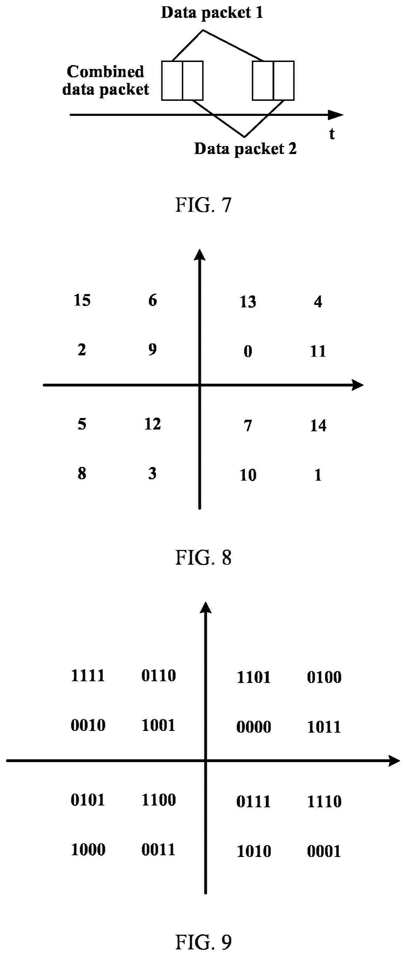

As shown in FIG. 7, initially transmitted data is a data packet 1 and a data packet 2. In this case, bits in each piece of combined data are respectively from the data packet 1 and the data packet 2, and each piece of combined data may be modulated by using one multiplexed modulation constellation diagram.

In this application, the data packet may be a transport block (transport block, TB), a codeword (codeword, CW), a code block (code block, CB), or a code block group (code block group, CBG). This is not specifically limited.

(6) Multiplexed modulation constellation diagram

The multiplexed modulation constellation diagram may be for modulating combined data. In the combined data, at least 1-bit data is from one data packet, and at least 1-bit data is from another data packet.

FIG. 8 shows an example of a matrix form of a 16QAM multiplexed modulation constellation diagram, where each value in the matrix represents a decimal value of a constellation point at a corresponding location. As shown in FIG. 9, a binary representation (corresponding to 4 bits) of each constellation point may be obtained by converting decimal into binary. In a constellation diagram shown in FIG. 9, horizontal coordinates corresponding to constellation points are [-3A, -A, A, 3A], and vertical coordinates are [-3A, -A, A, 3A]. A is a normalization factor. For example, $A=1/\sqrt{10}$.

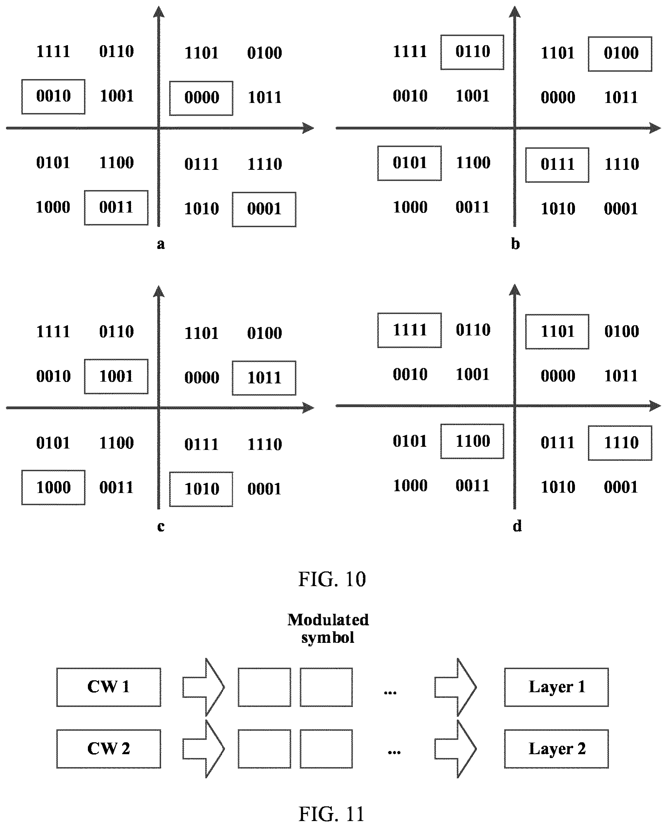

In an example, when the multiplexed modulation constellation diagram is used, and a receiving end has known first 2 bits or last 2 bits, a Euclidean distance between constellation points is doubled, so that a decoding success rate of the receiving end may be increased, and a signal-to-noise ratio (signal-to-noise ratio, SNR) for decoding may be decreased. Using FIG. 9 as an example, if first 2 bits corresponding to a constellation point are fixed to "00", as shown in a in FIG. 10, optional constellation points are denoted by using rectangular boxes. It can be learned that, compared with a Euclidean distance between adjacent constellation points shown in FIG. 4, a Euclidean distance between any two optional constellation points shown in a in FIG. 10 is at least doubled, so that the decoding success rate of the receiving end may be increased, and the signal-to-noise ratio for decoding may be decreased. Similarly, if first 2 bits corresponding to a constellation point are fixed to "01", as shown in b in FIG. 10, a Euclidean distance between any two optional constellation points is at least doubled. If first 2 bits corresponding to a constellation point are fixed to "10", as shown in c in FIG. 10, a Euclidean distance between any two optional constellation points is at least doubled. If first 2 bits corresponding to a constellation point are fixed to "11", as shown in d in FIG. 10, a Euclidean distance between any two optional constellation points is at least doubled.

(7) Transport layer (layer)

In a multiple-input multiple-output (multiple-input multiple-output, MIMO) technology, space can be divided into a plurality of transport layers (layers for short, which may also be referred to as spatial layers), and the layers are isolated from each other. Therefore, different layers may carry different information to implement space division multiplexing. By using the MIMO technology, a sending device needs to precode a signal before sending the signal, so that the sent signal can match a signal environment, to help a receiving device perform correct decoding by using correlation between signals. In an example, an implementation principle of the precoding is to complete processing on the signal by using an orthogonal matrix. The orthogonal matrix includes a row and a column, a rank represents a maximum quantity of rows of the orthogonal matrix, and a value of the rank is a maximum value of a quantity of layers. A quantity of layers actually used by the sending device may be less than or equal to the value of the rank. In addition, the quantity of layers also represents a quantity of streams of data, in other words, one data stream may be transmitted in each layer of space. Generally, one demodulation reference signal (demodulation reference signal, DMRS) port corresponds to one layer, and each layer corresponds to one data stream.

It may be understood that MIMO is further classified into a single-user multiple-input multiple-output (single-user MIMO, SU-MIMO) technology and a multi-user multiple-input multiple-output (multi-user MIMO, MU-MIMO) technology. In SU-MIMO, a single user uses all layers; and in MU-MIMO, different layers are allocated to different users for use.

(8) Layer mapping

A plurality of different CWs or a plurality of different TBs are mapped to different layers by using the layer mapping technology. A plurality of different CBs in a same CW or TB may be mapped to a same layer. One TB corresponds to one CW, and one CW corresponds to one or more CBs. Using an example in which a plurality of different CWs are mapped to different layers, in a modulation process, a sending device may modulate the plurality of CWs to obtain a plurality of modulated symbols. The sending device may further map, to the different layers by using the layer mapping technology, the plurality of different modulated symbols corresponding to the different CWs. As shown in FIG. 11, at least one modulated symbol corresponding to a CW 1 is mapped to a layer 1, and at least one modulated symbol corresponding to a CW 2 is mapped to a layer 2.

In this application, the layer mapping is not limited to mapping modulated symbols corresponding to different CWs or TBs to different layers, but also supports mapping different CBs in a same CW or TB to different layers.

Currently, in the blind retransmission solution shown in FIG. 5, a plurality of pieces of repeatedly transmitted data are separately modulated, joint demodulation is not performed on repeated data, and known information about successfully decoded data is not fully used. As a result, a demodulation success rate is low, causing low repeated transmission performance.

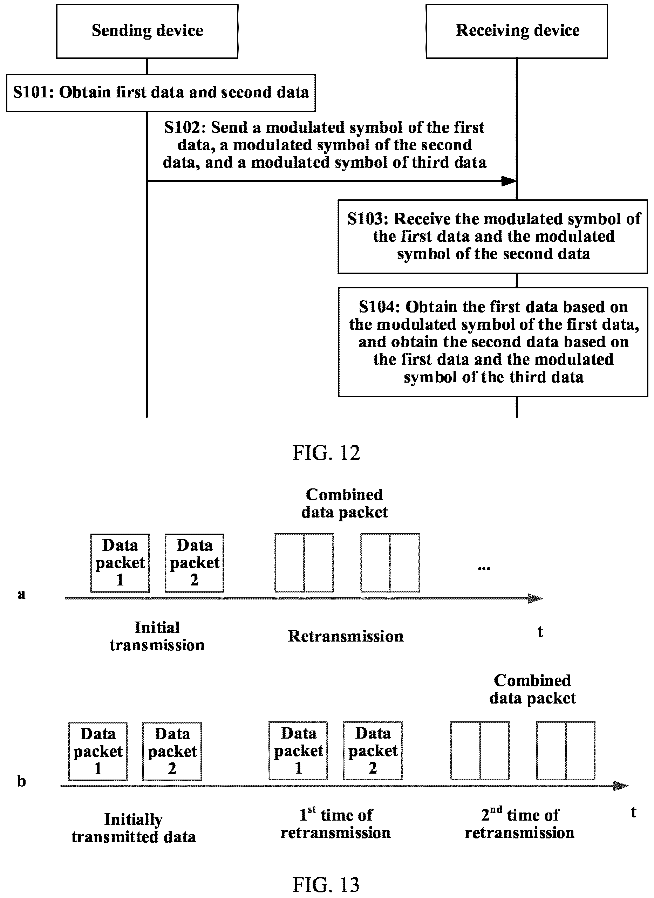

In embodiments provided in this application, the multiplexed modulation is introduced to enhance the repeated transmission performance. An embodiment of this application provides a communication method. The communication method may be implemented by a sending device, a component in the sending device, a receiving device, or a component in the receiving device. The component in this application may include, for example, at least one of a chip, a chip system, a processor, a transceiver, a processing unit, or a transceiver unit. In FIG. 12, the communication method is described by using the sending device and the receiving device as execution bodies. During actual application, the execution bodies may alternatively be replaced with the component in the sending device and/or the component in the receiving device.

As shown in FIG. 12, the communication method provided in this embodiment of this application may include the following steps.

S101: Obtain first data and second data.

The first data and the second data may be initially transmitted data, or the first data and the second data may be retransmitted data.

Optionally, the first data may include at least one TB, at least one CW, at least one CB, or at least one CBG. The second data may include at least one TB, at least one CW, at least one CB, or at least one CBG.

S102: Send a modulated symbol of the first data, a modulated symbol of the second data, and a modulated symbol of third data, where the modulated symbol of the third data is obtained based on the first data and the second data.

The first data may correspond to at least one constellation diagram (which may be referred to as a first constellation diagram), and the second data may correspond to at least one constellation diagram (which may be referred to as a second constellation diagram). The first constellation diagram may be the same as or different from the second constellation diagram. Both the first constellation diagram and the second constellation diagram are non-multiplexed modulation constellation diagrams.

The third data may correspond to at least one multiplexed modulation constellation diagram. In addition, a plurality of bits corresponding to each multiplexed modulation constellation diagram (or any one or more multiplexed modulation constellation diagrams) corresponding to the third data may be from the first data and the second data. In other words, each modulated symbol of the third data is obtained based on at least one bit in the first data and at least one bit in the second data. For example, according to a predefined rule, half of bits in the first data are selected from the first data, and half of bits in the second data are selected from the second data, to obtain 1st half of data in the third data. The other half of bits in the first data and the other half of bits in the second data are used as 2nd half of data in the third data. The predefined rule may be: selecting 1st half of bits in the first data and 1st half of bits in the second data; or selecting a $(4k+1)^{th}$ bit and a $(4k+2)^{th}$ bit in the first data and a $(4k+1)^{th}$ bit and a $(4k+2)^{th}$ bit in the second data, where k=0, 1, 2, ..., or $\lfloor K/4 \rfloor$, K is a bit length of the first data and the second data, and $\lfloor \; \rfloor$ represents a floor operation.

Optionally, n bits in the third data that correspond to each constellation point in the multiplexed constellation diagram are obtained by using at least one bit in the first data and at least one bit in the second data.

Specifically, for any constellation point, the sending device may map 2 bits in a data packet 1, namely, the first data, to first 2 bits of the constellation point, and map 2 bits in the second data to last 2 bits of the constellation point. Using the multiplexed modulation 16QAM constellation diagram shown in FIG. 9 as an example, each constellation point in the multiplexed modulation constellation diagram corresponds to n=4 bits in the third data, where in 4-bit data corresponding to each constellation point, first 2 bits and last 2 bits may be respectively from the first data and the second data. For example, the first 2 bits are from the first data, and the last 2 bits are from the second data. When the third data is modulated by using the multiplexed modulation constellation diagram, and the first data or the second data is known, a Euclidean distance between any two optional constellation points increases, so that better modulation performance can be achieved.

Alternatively, the sending device may map 2 bits in the first data to a $1^{st}$ bit and a $3^{rd}$ bit of the constellation point, and map 2 bits of a data packet 2 to a $2^{nd}$ bit and a $4^{th}$ bit of the constellation point; or map 2 bits in the first data to a $1^{st}$ bit and a $4^{th}$ bit of the constellation point, and map 2 bits of a data packet 2 to a $2^{nd}$ bit and a $3^{rd}$ bit of the constellation point. It may be understood that, in a mapping rule between data and a bit, the first data and the second data may be exchanged.

Optionally, in S102, after completing constellation mapping on the third data, the sending device may send the modulated symbol obtained through the mapping.

S103: In correspondence to S102, the receiving device may receive the modulated symbol of the first data and the modulated symbol of the third data.

Optionally, the receiving device may alternatively receive the modulated symbol of the second data and the modulated symbol of the third data.

S104: The receiving device may obtain the first data based on the modulated symbol of the first data, and obtain the second data based on the first data and the modulated symbol of the third data.

In S104, optionally, the receiving device may demodulate and decode the modulated symbol of the first data, to obtain the first data. Further, optionally, the receiving device may demodulate the modulated symbol of the third data, and perform joint decoding on the first data and a demodulation result of the modulated symbol of the third data, to obtain the second data.

It may be understood that, in S102, if the first data and the second data are initially transmitted data, the third data may be retransmitted data. As shown in a scenario in a in FIG. 13, the sending device may send the modulated symbol of the third data at least once, and the third data may be used as retransmitted data. For another example, the first data and the second data are both initially transmitted data and retransmitted data. The sending device may send the modulated symbol of the first data and the modulated symbol of the second data during initial transmission, send the modulated symbol of the first data and the modulated symbol of the second data during at least one time of retransmission, and send the modulated symbol of the third data during at least one time of retransmission. For another example, the sending device may send the modulated symbol of the first data and the modulated symbol of the second data during initial transmission, send the modulated symbol of the first data and the modulated symbol of the second data during at least one time of retransmission, and send the modulated symbol of the third data during at least one time of retransmission. As shown in a scenario in b in FIG. 13, the sending device may send the modulated symbol of the first data and the modulated symbol of the second data during initial transmission, send the modulated symbol of the first data and the modulated symbol of the second data during a $1^{st}$ time of retransmission, and send the modulated symbol of the third data during a $2^{nd}$ time of retransmission.

In this application, the modulated symbol of the first data, the modulated symbol of the second data, and the modulated symbol of the third data meet at least one of the following condition 1 to condition 3:

Condition 1: The modulated symbol of the first data is mapped to a first layer, the modulated symbol of the second data corresponds to a second layer, and the modulated symbol of the third data corresponds to the first layer and the second layer. The first layer is different from the second layer. According to the condition 1, the sending device may send the modulated symbol of the first data at the first layer, send the modulated symbol of the second data at the second layer, and send the modulated symbol of the third data at the first layer and the second layer.

In the condition 1, that the first layer is different from the second layer means: The first layer and the second layer are different layers. For example, the first layer is a layer 0, and the second layer is a layer 1. Alternatively, that the first layer is different from the second layer may mean: Reliability of the first layer is different from reliability of the second layer.

In this application, reliability of a layer may be determined based on an index of the layer and/or channel quality of the layer.

That the reliability of the layer may be determined based on the index of the layer means: Reliability of layers with different indexes is different. For example, for a layer 0 to a layer M (M is greater than or equal to 1) in SU-MIMO, reliability of the layers is in descending order. A reason is as follows: A singular value obtained through singular value decomposition (singular value decomposition, SVD) of a channel transmission matrix for MIMO multi-layer transmission may represent reliability of a layer. A larger singular value corresponding to a layer indicates higher reliability of the layer, and a smaller singular value corresponding to a layer indicates lower reliability of the layer. It may be considered that, after SVD decomposition is performed on a data frame in SU-MIMO, singular values respectively corresponding to the layer 0 to the layer M are in descending order. Therefore, a smaller index of a layer indicates higher reliability of the layer.

In addition, the reliability of the layer may alternatively be determined based on the channel quality of the layer, where the channel quality may be obtained through measurement. For example, the channel quality of the layer may be determined based on a channel quality indicator (channel quality indicator, CQI). It may be understood that higher channel quality that is of a layer and that is indicated by the CQI indicates higher reliability of the layer. In a possible example, the CQI may be obtained by the receiving device through measurement on a channel quality information-reference signal (channel state information-reference signal, CSI-RS).

According to the condition 1, because transmission reliability of different layers is different, and the modulated symbol of the first data and the modulated symbol of the second data are respectively transmitted at different layers, transmission reliability of the modulated symbol of the first data is different from transmission reliability of the modulated symbol of the second data. Consequently, a probability that the receiving device receives and successfully obtains the first data through demodulation and decoding is different from a probability that the receiving device receives and successfully obtains the second data through demodulation and decoding.

Condition 2: The modulated symbol of the first data corresponds to a first transmission reception point, the modulated symbol of the second data corresponds to a second transmission reception point, the modulated symbol of the third data corresponds to the first transmission reception point and/or the second transmission reception point, and the first transmission reception point is different from the second transmission reception point. The first transmission reception point and the second transmission reception point may be different TRPs. According to the condition 1, the sending device may send the modulated symbol of the first data through the first transmission reception point, send the modulated symbol of the second data through the second transmission reception point, and send the modulated symbol of the third data through the first transmission reception point and/or the second transmission reception point.

Optionally, using downlink transmission as an example, a network device (serving as the sending device) may send the modulated symbol of the first data, the modulated symbol of the second data, and the modulated symbol of the third data to a terminal device (serving as the receiving device) through the first transmission reception point and the second transmission reception point. The modulated symbol of the first data may be obtained by the first transmission reception point through modulation on the first data, or may be received by the first transmission reception point. The modulated symbol of the second data may be obtained by the second transmission reception point through modulation on the second data, or may be received by the second transmission reception point. Further, optionally, if the modulated symbol of the first data is received by the first transmission reception point, and/or the modulated symbol of the second data is received by the second transmission reception point, the same network device may obtain the modulated symbol of the first data through modulation on the first data, obtain the modulated symbol of the second data through modulation on the second data, and send the obtained modulated symbols to the corresponding transmission reception points. The network device may be an access network device connected to the first transmission reception point and the second transmission reception point. Alternatively, the network device may be the first transmission reception point or the second transmission reception point. For example, the first transmission reception point may modulate the first data and the second data, to obtain the modulated symbol of the first data and the modulated symbol of the second data, and then send the modulated symbol of the second data to the second transmission reception point. Similarly, in uplink transmission, the modulated symbol of the first data and the modulated symbol of the second data may be respectively sent to the first transmission reception point and the second transmission reception point. For the uplink transmission, the first transmission reception point or the second transmission reception point may serve as the receiving device, or a network device other than the first transmission reception point or the second transmission reception point may serve as the receiving device. In the uplink transmission, the receiving device may receive at least one of the modulated symbol of the first data, the modulated symbol of the second data, and the modulated symbol of the third data from the first transmission reception point or the second transmission reception point, and the receiving device performs S104.

According to the condition 2, the first transmission reception point is different from the second transmission reception point. Therefore, the modulated symbol of the first data and the modulated symbol of the second data are transmitted through different TRPs. Because different transmission reception points correspond to different transmission reliability, and the modulated symbol of the first data and the modulated symbol of the second data are respectively transmitted through different transmission reception points, transmission reliability of the modulated symbol of the first data is different from transmission reliability of the modulated symbol of the second data. Consequently, a probability that the receiving device receives and successfully obtains the first data through demodulation and decoding is different from a probability that the receiving device receives and successfully obtains the second data through demodulation and decoding.

Condition 3: The first data corresponds to a first modulation and coding scheme (modulation and coding scheme, MCS), the second data corresponds to a second modulation and coding scheme, and the first modulation and coding scheme is different from the second modulation and coding scheme.

In this application, the modulation and coding scheme may also be referred to as a modulation and coding scheme. The modulation and coding scheme may be indicated by an MCS table and/or an MCS index (MCS index).

Table 1 shows an MCS table, and the MCS table includes a plurality of MCSs. The first modulation and coding scheme and the second modulation and coding scheme may be two different MCSs in Table 2. The different MCSs mean that the MCSs are different in terms of at least one of a modulation order (modulation order), a target code rate (target code rate), and spectral efficiency (spectral efficiency). In addition, the first modulation and coding scheme and the second modulation and coding scheme may alternatively belong to different MCS tables, and the first modulation and coding scheme and the second modulation and coding scheme are different in terms of at least one of a modulation order, a target code rate, and spectral efficiency.

Table 1

| MCS index | Modulation order (modulation order) $Q_m$ | Target code rate (target code rate) [1024] | Spectral efficiency (spectral efficiency) |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | Reserved (reserved) | |
| 30 | 4 | Reserved | |
| 31 | 6 | Reserved | |

In Table 1, a 1st column is the MCS index for identifying different MCSs, a 2nd column is the modulation order, a 3rd

column is a quantity of bits of data transmitted per unit time, namely, the target code rate, and a 4th column is the spectral efficiency. It can be learned from the 1st column and the 2nd column that one MCS index may correspond to one MCS, and one modulation order may correspond to a plurality of MCSs. In other words, a plurality of MCSs may correspond to a same modulation order.

Optionally, the first modulation and coding scheme and the second modulation and coding scheme may be MCSs with different MCS indexes in Table 1.

As shown in Table 2, the first modulation and coding scheme and the second modulation and coding scheme in this application may be included in a same MCS table, and correspond to a same index.

Table 2

| MCS index | First modulation and coding scheme | | | Second modulation and coding scheme | | |
|---|---|---|---|---|---|---|
| | Modulation order Qm | Target code rate [1024] | Spectral efficiency | Modulation order Qm | Target code rate [1024] | Spectral efficiency |
| 0 | 2 | 120 | 0.2344 | 2 | 449 | 0.8770 |
| 1 | 2 | 157 | 0.3066 | 2 | 526 | 1.0273 |
| 2 | 2 | 193 | 0.3770 | 2 | 602 | 1.1758 |
| 3 | 2 | 251 | 0.4902 | 2 | 679 | 1.3262 |
| 4 | 2 | 308 | 0.6016 | 4 | 340 | 1.3281 |
| 5 | 2 | 379 | 0.7402 | 4 | 378 | 1.4766 |

It may be understood that, based on the MCS table shown in Table 2, the MCSs respectively corresponding to the first data and the second data may be indicated by one MCS index.

According to the condition 3, the first modulation and coding scheme is different from the second modulation and coding scheme. Therefore, the first data and the second data are modulated and encoded by using different modulation and coding schemes. Because transmission reliability is different in different modulation and coding schemes, transmission reliability of the modulated symbol of the first data is different from transmission reliability of the modulated symbol of the second data. Consequently, a probability that the receiving device receives and successfully obtains the first data through demodulation is different from a probability that the receiving device receives and successfully obtains the second data through demodulation.

It can be learned that, according to any one or more of the foregoing condition 1 to condition 3, the transmission reliability of the first data is different from the transmission reliability of the second data in this application. As a result, the probability that the receiving device receives and successfully obtains the first data through demodulation is different from the probability that the receiving device receives and successfully obtains the second data through demodulation. In comparison with transmitting the first data and the second data at a same layer through a same transmission reception point in a same MCS, when the modulated symbol of the first data and the modulated symbol of the second data are sent based on any one or more of the condition 1 to the condition 3, there is a higher probability that the receiving device successfully obtains one piece of data through demodulation but fails to obtain the other piece of data through demodulation. In this case, the receiving device may obtain, through demodulation based on the received modulated symbol of the third data, the data that fails to be obtained through demodulation, to improve a demodulation success rate, so that data demodulation performance in a repeated transmission scenario may be improved, to maximize a multiplexed modulation gain.

It may be understood that, in this application, the two pieces of data, namely, the first data and the second data, are used as an example for description. When a quantity of pieces of data that actually need to be repeatedly sent is greater than 2, more pieces of data may be repeatedly sent with reference to the descriptions in this application. For example, when data that needs to be repeatedly sent is the first data, the second data, and the third data, the sending device may send the first data, the second data, the third data, and fourth data. In this case, the fourth data is determined based on the first data, the second data, and the third data. To be specific, the fourth data may be sent with reference to the descriptions of the third data in this application. A specific implementation of sending the fourth data is not described in detail.

The following separately describes implementations of S102 in the condition 1, the condition 2, and the condition 3 with reference to examples.

(1) S102 in the condition 1

In the condition 1, S102 may include: The sending device sends the modulated symbol of the first data at the first layer, sends the second data at the second layer, and sends the modulated symbol of the third data at the first layer and the second layer. Correspondingly, the receiving device may receive the modulated symbol of the first data at the first layer, receive the modulated symbol of the second data at the second layer, and/or receive the modulated symbol of the third data at the first layer and the second layer. The first layer may include at least one transport layer, and the second layer may include at least one transport layer.

In a possible implementation, during initial transmission, the sending device may send the modulated symbol of the first data at the first layer, and send the second data at the second layer; and during at least one time of retransmission, the sending device may send the modulated symbol of the third data at the first layer and the second layer.

In another possible implementation, during initial transmission, the sending device may send the modulated symbol of the first data at the first layer, and send the second data at the second layer; in q times of retransmission, during a $1^{st}$ to a $(q-1)^{th}$ time of retransmission, the sending device may send the modulated symbol of the first data at the first layer, and send the second data at the second layer; and during the $1^{st}$ to the $(q-1)^{th}$ time of retransmission, the sending device may send the modulated symbol of the third data at the first layer and the second layer, where q is a positive integer greater than 2.

Optionally, in the condition 1, the sending device may further determine a correspondence between the first data and the first layer, and determine a correspondence between the second data and the second layer; and then send the modulated symbol of the first data at the first layer, and send the modulated symbol of the second data at the second layer.

Optionally, the sending device may determine a correspondence between data and a layer in a manner 1 or a manner 2.

The manner 1 means: The sending device determines the correspondence between the first data and the first layer, and determines the correspondence between the second data and the second layer. For example, an index of the first layer may be less than an index of the second layer; and a generation moment of the first data may be earlier than a generation moment of the second data, or there may be no requirement on a moment sequence between the first data and the second data. For another example, optionally, it may be determined, based on levels of transmission reliability of any modulated symbol string (for example, a modulated symbol string with highest transmission reliability) corresponding to the first data and reliability of any modulated symbol string (for example, a modulated symbol string with highest transmission reliability) corresponding to the second data, that the first data corresponds to the first layer and the second data corresponds to the second layer. For example, a modulated symbol string, of data, with higher reliability may be preferentially mapped to a layer with a smaller index (or higher reliability).

In this application, a symbol string is all modulated symbols mapped to one corresponding transport layer. For example, if the modulated symbols of the first data are mapped to a plurality of layers, the modulated symbols of the first data may include a plurality of modulated symbol strings.

The following describes a manner of determining reliability of a modulated symbol string, and details are not described herein.

Optionally, in the manner 1, the sending device may send first information after determining the correspondence between the first data and the first layer and the correspondence between the second data and the second layer, where the first information indicates the correspondence between the first data and the first layer and the correspondence between the second data and the second layer to the receiving device, so that the receiving device can correctly receive the data.

Further, the sending device may map, based on the correspondence between data and a layer, a modulated symbol corresponding to data to a corresponding layer, and send modulated symbols of different data at different layers.

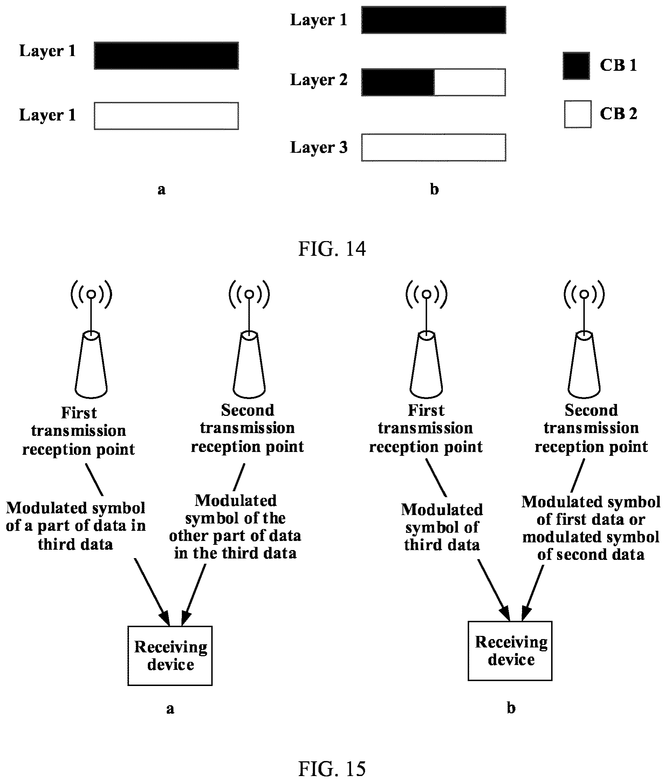

For example, as shown in a in FIG. 14, the first data is a CB 1, the second data is a CB 2, the first layer includes a layer 1, and the second layer includes a layer 2. The sending device may map a modulated symbol of the CB 1 to the layer 1, and map a modulated symbol of the CB 2 to the layer 2. The layer 1 may accommodate all modulated symbols of the CB 1, and the layer 2 may accommodate all modulated symbols of the CB 2. In the example shown in a in FIG. 14, the modulated symbols of the third data may be mapped to the layer 1 and the layer 2.

For another example, as shown in b in FIG. 14, if a layer 1 cannot accommodate all modulated symbols of a CB 1, the sending device may map a part of the modulated symbols of the CB 1 to a layer 2. In addition, the sending device may further map a part of modulated symbols of a CB 2 to the layer 2. Therefore, bits corresponding to a modulated symbol string at the layer 2 are from the CB 1 and the CB 2. In the example shown in b in FIG. 14, the first layer may include the layer 1 and the layer 2, and the second layer may include the layer 2 and a layer 3. In the example shown in b in FIG. 14, the modulated symbols of the third data may be mapped to the layer 1, the layer 2, and the layer 3.

It may be understood that there may be a plurality of modulated symbols of the first data (or the second data), and each modulated symbol may correspond to one transport layer. The sending device may determine a mapping relationship between a plurality of modulated symbols of data and a plurality of transport layers based on reliability of the plurality of modulated symbols and/or reliability of the layers. For example, any modulated symbol string is obtained based on a bit string including p bits, and the p bits are all from the first data or the second data, or may be from the first data and the second data. The sending device may determine, based on reliability of the modulated symbol string, a layer to which the modulated symbol string is mapped, where p is a positive integer greater than or equal to 2. If the p bits are all from the first data, the layer to which the modulated symbol string is mapped belongs to the first layer. If the p bits are all from the second data, the layer to which the modulated symbol string is mapped belongs to the second layer. In the foregoing example, p is greater than or equal to n, n is a modulation order, and the bit string including the p bits may be modulated to obtain the modulated symbol string.

Optionally, reliability of a modulated symbol string (or a modulated symbol) may be determined based on transmission reliability of a bit corresponding to the modulated symbol string. The transmission reliability of the bit represents an error probability of the bit. The transmission reliability of the bit may be determined based on at least one of a column weight of a parity-check matrix of channel coding, bit channel reliability of channel coding, or a bit error probability of channel coding.

The column weight of the parity-check matrix of the channel coding is a quantity of non-zero elements in a column of the parity-check matrix of the channel coding, and may indicate a level of an error probability of the bit. Each bit in the first data (or the second data) corresponds to one column weight of the parity-check matrix of the channel coding. Generally, a larger column weight indicates higher reliability of a corresponding bit. An algorithm for the bit channel reliability or the bit error probability of the channel coding may be a performance prediction algorithm, or may be a statistical average that is of an error probability and that is obtained through real-world simulation. The performance prediction algorithm is, for example, a density evolution algorithm, a density evolution algorithm based on Gaussian approximation, or an extrinsic information transfer (extrinsic information transfer, EXIT) algorithm.

In an example of determining the transmission reliability of the bit, if the first data or the second data is encoded by using a low-density parity-check (low-density parity-check, LDPC) code, reliability of each bit in the first data or the second data may be determined based on a column weight of an LDPC parity-check matrix or an error probability of each bit. For example, a larger column weight corresponding to a bit indicates higher transmission reliability of the bit, and a lower error probability of a bit indicates higher transmission reliability of the bit.

In another example of determining the transmission reliability of the bit, if the first data or the second data is encoded by using a polar (Polar) code, transmission reliability of each bit in the first data or the second data may be determined based on polar channel reliability of the polar code and/or an error probability of each bit. For example, higher polar channel reliability corresponding to a bit indicates higher transmission reliability of the bit, and a lower error probability of a bit indicates higher transmission reliability of the bit.

Optionally, the transmission reliability of the bit may be quantified, to determine a transmission reliability value of each bit (the value may be a positive integer).

After the transmission reliability of all the bits corresponding to the modulated symbol string is determined, the transmission reliability of the modulated symbol string may be determined based on the transmission reliability of all the bits. For example, the transmission reliability values of all the bits corresponding to the modulated symbol string may be accumulated or multiplied, and an obtained value is used as a transmission reliability value of the modulated symbol string. The transmission reliability value of the modulated symbol string may be for determining levels of transmission reliability of a plurality of modulated symbol strings.

Optionally, the sending device may map modulated symbol strings with different transmission reliability to different layers. For example, when determining that parameter reliability of a first modulated symbol string is higher than transmission reliability of a second modulated symbol string, the sending device may map the first modulated symbol string to a layer with higher reliability (referred to as a layer corresponding to the first modulated symbol string), and map the second modulated symbol string to a layer with lower reliability (referred to as a layer corresponding to the second modulated symbol string), in other words, transmission reliability of the layer corresponding to the first modulated symbol string is higher than or equal to transmission reliability of the layer corresponding to the second modulated symbol string. As described above, the reliability of the layer may be determined based on the index of the layer and/or the channel quality of the layer. According to this implementation, one or more modulated symbol strings with higher transmission reliability may be mapped to a layer with higher reliability, to improve transmission reliability of the modulated symbol.

It may be understood that the first modulated symbol string and the second modulated symbol string meet at least one of the following:

(1) The first data includes a bit corresponding to the first modulated symbol string, and the second data includes a bit corresponding to the second modulated symbol string. In other words, the bit corresponding to the first modulated symbol string and the bit corresponding to the second modulated symbol string are respectively from the first data and the second data. In this example, the first layer in S102 includes the layer corresponding to the first modulated symbol string, and the second layer includes the layer corresponding to the second modulated symbol string.

For example, when the first modulated symbol string corresponds to the first data, the second modulated symbol string corresponds to the second data, and reliability of the modulation and coding scheme for the first data is higher than reliability of the modulation and coding scheme for the second data, the sending device may map the first modulated symbol to the layer 0, and map the second modulated symbol to the layer 1, where reliability of the layer 0 is higher than reliability of the layer 1.

(2) The first data includes a bit corresponding to the first modulated symbol string and at least one bit in a bit corresponding to the second modulated symbol string. Optionally, the bit corresponding to the second modulated symbol string may include at least one bit in the second data.

For example, when the plurality of modulated symbol strings corresponding to the first data cannot be accommodated at a same transport layer, the sending device may map different modulated symbol strings to different layers based on reliability of the modulated symbol strings. In other words, after the first data is modulated, at least the first modulated symbol string and the second modulated symbol string may be obtained, and the first modulated symbol string and the second modulated symbol string correspond to different layers. In this example, the first layer in S102 includes the layer corresponding to the first modulated symbol string and the layer corresponding to the second modulated symbol string.

(3) The second data includes at least one bit in a bit corresponding to the first modulated symbol string and a bit corresponding to the second modulated symbol string. Optionally, the bit corresponding to the second modulated symbol string may include at least one bit in the first data.

For example, when a plurality of modulated symbol strings corresponding to the second data cannot be accommodated at a same transport layer, the sending device may map different modulated symbol strings to different layers based on reliability of the modulated symbol strings. In other words, after the second data is modulated, at least the first modulated symbol string and the second modulated symbol string may be obtained, and the first modulated symbol string and the second modulated symbol string correspond to different layers. In this example, the second layer in S102 includes the layer corresponding to the first modulated symbol string and the layer corresponding to the second modulated symbol string.

It may be understood that, with reference to the foregoing descriptions, the sending device may determine a layer corresponding to each modulated symbol string. The sending device may further send second information indicating a reliability order of the plurality of modulated symbol strings of the first data and/or indicating a reliability order of the plurality of modulated symbol strings of the second data. For example, the second information may indicate an interleaving scheme for the plurality of modulated symbol strings of the first data (or the second data), the interleaving scheme may indicate a sequence of interleaved modulated symbol strings, and the plurality of modulated symbol strings may be mapped, in the sequence, to a plurality of transport layers sorted in descending order of reliability. In other words, the sending device and the receiving device may negotiate or determine, by using the second information, the reliability order of the plurality of modulated symbol strings of the first data and/or the reliability order of the plurality of modulated symbol strings of the second data. Using the first data as an example, when the plurality of modulated symbol strings of the first data correspond to a plurality of layers, a sending end and a receiving end may determine, based on reliability of the plurality of modulated symbol strings of the first data, the layers corresponding to the plurality of modulated symbol strings, to improve a receiving success rate. For example, the layers corresponding to the plurality of modulated symbol strings all belong to the first layer.

Optionally, a correspondence between each modulated symbol string of the first data and a layer and a correspondence between each modulated symbol string of the second data and a layer may be carried in a same information element or field or different information elements or fields in a same message or same signaling, or may be separately carried in different messages or signaling. This is not specifically limited in this application.

Optionally, in this application, a mapping relationship between a plurality of modulated symbol strings of the third data and layers may be determined with reference to a mapping relationship between the first modulated symbol string and a layer and a mapping relationship between the second modulated symbol string and a layer. Details are not described.

Manner 2: The sending device may receive first information, where the first information may indicate a correspondence between the first data and the first layer and a correspondence between the second data and the second layer. Optionally, the first information may specifically indicate an order of data reliability of the first data and data reliability of the second data, and/or the first information specifically indicates an order of reliability of the first layer and reliability of the second layer.

Therefore, the sending device may send the modulated symbol of the first data at the first layer and send the third data at the second layer based on the correspondence between the first data and the first layer and the correspondence between the second data and the second layer.

In the manner 2, the correspondence between the first data and the first layer and the correspondence between the second data and the second layer may be determined by the network device or the receiving device. For a manner of determining the correspondence, refer to the descriptions of determining the correspondence by the sending device in the manner 1. Details are not described again.

Optionally, in the manner 2, the sending device may map modulated symbol strings with different reliability to different layers. The modulated symbol string may be from the first data, the second data, or the third data. For a mapping mode, refer to the descriptions in the manner 1. Details are not described herein again.

Optionally, after determining a correspondence between a modulated symbol string and a layer, the sending device may further send second information indicating a reliability order of the plurality of modulated symbol strings of the first data and/or indicating a reliability order of a plurality of modulated symbol strings of the second data. For example, the second information may indicate an interleaving scheme for the plurality of modulated symbol strings of the first data (or the second data), the interleaving scheme may indicate a sequence of interleaved modulated symbol strings, and the plurality of modulated symbol strings may be mapped, in the sequence, to a plurality of transport layers sorted in descending order of reliability.

In addition, the sending device may alternatively receive second information, and learn of a correspondence between a modulated symbol string and a layer based on the second information. In this case, the correspondence between a modulated symbol string and a layer may be determined by the network device or the receiving device. For a determining manner, refer to the descriptions of determining the correspondence between a modulated symbol string and a layer by the sending device.

(2) S102 in the condition 2

In the condition 2, S102 may include: The sending device sends the modulated symbol of the first data through the first transmission reception point, sends the second data through the second transmission reception point, and sends the modulated symbol of the third data through the first transmission reception point and/or the second transmission reception point. Correspondingly, the receiving device may receive the modulated symbol of the first data through the first transmission reception point, receive the modulated symbol of the second data through the second transmission reception point, and receive the modulated symbol of the third data through the first transmission reception point and/or the second transmission reception point.

In a possible implementation, as shown in a in FIG. 15, if the modulated symbol of the third data corresponds to the first transmission reception point and the second transmission reception point, a modulated symbol of a part of data (for example, $1^{st}$ half or $2^{nd}$ half) in the third data may be sent through the first transmission reception point, and a modulated symbol of a remaining part of data (or referred to as the other part of data, for example, the $2^{nd}$ half or the $1^{st}$ half) in the third data may be sent through the second transmission reception point. Alternatively, the modulated symbols corresponding to the entire third data are separately sent through the first transmission reception point and the second parameter reception point.

For example, during initial transmission, the sending device may send the modulated symbol of the first data through the first transmission reception point, and send the second data through the second transmission reception point; and during retransmission, the sending device may send the modulated symbol of the part of data in the third data through the first transmission reception point, and send the modulated symbol of the remaining part of data in the third data through the second transmission reception point. Correspondingly, during the initial transmission, the receiving device may separately demodulate and decode the modulated symbols received through the first transmission reception point and the second transmission reception point. During the retransmission, the receiving device may demodulate the modulated symbols received through the first transmission reception point and the second transmission reception point, and perform joint decoding on demodulation results.

For another example, during initial transmission, the sending device may send the modulated symbol of the first data through the first transmission reception point, and send the second data through the second transmission reception point. In m times of retransmission, during a $1^{st}$ to an $(m-1)^{th}$ time of retransmission, the sending device may send the modulated symbol of the first data through the first transmission reception point, and send the second data through the second transmission reception point; and during an $m^{th}$ time of retransmission, the sending device may send the modulated symbol of the part of data in the third data through the first transmission reception point, and send the modulated symbol of the remaining part of data in the third data through the second transmission reception point. Correspondingly, during the initial transmission and the $1^{st}$ to the $(m-1)^{th}$ time of retransmission, the receiving device may separately demodulate and decode the modulated symbols received through the first transmission reception point and the second transmission reception point. During the $m^{th}$ time of retransmission, the receiving device may demodulate the modulated symbols received through the first transmission reception point and the second transmission reception point, and perform joint decoding on demodulation results.

It may be understood that, if the modulated symbols of the third data correspond to the first transmission reception point and the second transmission reception point, the sending device may receive and/or send third information, where the third information may indicate that the modulated symbols of the third data correspond to the first transmission reception point and the second transmission reception point.

For example, in the downlink transmission, the network device serves as the sending device, and the terminal device serves as the receiving device. When the network device determines to send the third data through the first transmission reception point and the second transmission reception point, the network device may send the third information to the receiving device, where the third information indicates the receiving device to receive the modulated symbols of the third data through the first transmission reception point and the second transmission reception point.

For another example, in the uplink transmission, the terminal device serves as the sending device, and the network device serves as the receiving device. When the network device determines to send the third data through the first transmission reception point and the second transmission reception point, the receiving device may send the third information to the sending device, where the third information indicates the sending device to send the modulated symbols of the third data through the first transmission reception point and the second transmission reception point.

In addition, it may alternatively be considered that the third information is indicated by the sending device to the receiving device (or by the receiving device to the sending device), regardless of which of the sending device and the receiving device is the network device.

In another possible implementation, as shown in b in FIG. 15, if the modulated symbol of the third data corresponds to one of the first transmission reception point and the second transmission reception point, the modulated symbol of the first data or the modulated symbol of the second data may be further sent through the other of the first transmission reception point and the second transmission reception point.

For example, during initial transmission, the sending device may send the modulated symbol of the first data through the first transmission reception point, and send the second data through the second transmission reception point; during retransmission, the sending device may send a modulated symbol of a part of data in the third data through the first transmission reception point, and send a modulated symbol of a remaining part of data in the third data through the second transmission reception point; and/or during the retransmission, the sending device may send the modulated symbol of the entire third data through the first transmission reception point (or the second transmission reception point), and send the modulated symbol of the first data (or the second data) through the second transmission reception point (or the first transmission reception point). Correspondingly, during the initial transmission, the receiving device may separately demodulate and decode the modulated symbols received through the first transmission reception point and the second transmission reception point. During the retransmission, the receiving device may demodulate and decode the modulated symbol (namely, the modulated symbol of the first data or the second data) received through the second transmission reception point (or the first transmission reception point), decode the modulated symbol (namely, the modulated symbol of the third data) received through the first transmission reception point (or the second transmission reception point), and perform joint decoding on demodulation results of the modulated symbols respectively corresponding to the two transmission reception points.

For another example, during initial transmission, the sending device may send the modulated symbol of the first data through the first transmission reception point, and send the second data through the second transmission reception point. In m times of retransmission, during a $1^{st}$ to an $(m-1)^{th}$ time of retransmission, the sending device may send the modulated symbol of the first data through the first transmission reception point, and send the second data through the second transmission reception point, where m is a positive integer; and during an $m^{th}$ time of retransmission, the sending device may send a modulated symbol of a part of data in the third data through the first transmission reception point, and send a modulated symbol of a remaining part of data in the third data through the second transmission reception point; and/or during the $m^{th}$ time of retransmission, the sending device may send the modulated symbol of the entire third data through the first transmission reception point (or the second transmission reception point), and send the modulated symbol of the first data (or the second data) through the second transmission reception point (or the first transmission reception point). Correspondingly, during the initial transmission and the $1^{st}$ to the $(m-1)^{th}$ time of retransmission, the receiving device may separately demodulate and decode the modulated symbols received through the first transmission reception point and the second transmission reception point. During the $m^{th}$ time of retransmission, the receiving device may demodulate and decode the modulated symbol (namely, the modulated symbol of the first data or the second data) received through the second transmission reception point (or the first transmission reception point), decode the modulated symbol (namely, the modulated symbol of the third data) received through the first transmission reception point (or the second transmission reception point), and perform joint decoding on demodulation results of the modulated symbols respectively corresponding to the two transmission reception points.

It may be understood that, if the modulated symbol of the third data corresponds to one of the first transmission reception point and the second transmission reception point, the sending device may receive and/or send fourth information, where the fourth information may indicate that the modulated symbol of the third data corresponds to the first transmission reception point or the second transmission reception point. In addition, the fourth information may further indicate that the modulated symbol of the first data or the modulated symbol of the second data corresponds to the other transmission reception point.

For example, in the downlink transmission, the network device serves as the sending device, and the terminal device serves as the receiving device. When the network device determines to send the modulated symbol of third data through the first transmission reception point and send the modulated symbol of the first data through the second transmission reception point, the network device may send the fourth information to the receiving device, where the fourth information indicates the receiving device to receive the modulated symbol of the third data through the first transmission reception point and receive the modulated symbol of the first data through the second transmission reception point.

For another example, in the uplink transmission, the terminal device serves as the sending device, and the network device serves as the receiving device. When the network device determines to send the modulated symbol of the third data through the first transmission reception point and send the modulated symbol of the first data through the second transmission reception point, the receiving device may send the fourth information to the sending device, where the fourth information indicates the sending device to send the modulated symbol of the third data through the first transmission reception point and send the modulated symbol of the first data through the second transmission reception point.

In addition, it may alternatively be considered that the fourth information is indicated by the sending device to the receiving device (or by the receiving device to the sending device), regardless of which of the sending device and the receiving device is the network device.

It may be further understood that, if the modulated symbol of the third data corresponds to one of the first transmission reception point and the second transmission reception point, and the modulated symbol of the first data or the modulated symbol of the second data corresponds to the other transmission reception point, the sending device may receive and/or send fifth information, where the fifth information may indicate a transmission resource for the first data or the second data, where for example, the transmission resource includes a time domain resource and/or a frequency domain resource. In addition, the sending device may receive and/or send sixth information, where the sixth information may indicate a transmission resource for the third data, where for example, the transmission resource includes a time domain resource and/or a frequency domain resource. Because a size of the time-frequency resource for sending the third data may be different from a size of the time-frequency resource for sending one of the first data and the second data, when the third data and the first data or the second data are separately sent through two transmission reception points during one time of repeated transmission, the network device may separately indicate the time-frequency resources for the third data and the first data or the second data, to improve transmission reliability.

Optionally, the fifth information and the sixth information may be carried in different information elements or fields in a same message or same signaling (for example, DCI), or may be carried in different messages or signaling. This is not specifically limited in this application.

Optionally, in the condition 2, the network device may schedule data transmission of the first transmission reception point and the second transmission reception point by using one piece of control signaling.

Using the downlink transmission as an example, the network device may send control information (for example, downlink control information (downlink control information, DCI)) by using a physical downlink control channel (physical downlink control channel, PDCCH), to schedule the first data and the second data. The control information may indicate that the first data (or the modulated symbol corresponding to the first data) is to be sent through the first transmission reception point, and/or indicate that the second data (or the modulated symbol corresponding to the second data) is to be sent through the second transmission reception point.

For example, when one piece of DCI may be for scheduling the first data and the second data to be separately sent through different transmission reception points, the first data and the second data may be different CBs in a same TB. For another example, one piece of DCI may be for scheduling the part of data in the third data to be sent through one transmission reception point, and scheduling the remaining part of data in the third data to be sent through the other transmission reception point. The DCI may be used as the foregoing fourth information, or a corresponding indication field carried in the DCI may be used as the fourth information.

For another example, one piece of DCI may be for scheduling the third data to be sent through one transmission reception point, and scheduling the first data or the second data to be sent through the other transmission reception point. The DCI may be used as the foregoing fourth information, or a corresponding indication field carried in the DCI may be used as the fourth information. For example, the DCI may include a correspondence between data and a transmission reception point. Optionally, a resource indication field in the DCI may include the fifth information and the sixth information. For example, the DCI may include a correspondence between data, a transmission reception point, and a transmission resource.

In an example of an implementation of S102 in the condition 2, the network device serves as the sending device, and the terminal device serves as the receiving device. The network device may indicate a to-be-used repeated transmission scheme by using scheduling information. The to-be-used repeated transmission scheme may include one of the following: Scheme 1: The modulated symbol of the first data is only sent through the first transmission reception point, and the modulated symbol of the second data is sent through the second transmission reception point. Scheme 2: The modulated symbol of the part of data in the third data is sent through the first transmission reception point, and the modulated symbol of the remaining part of data in the third data is sent through the second transmission reception point. Scheme 3: The modulated symbol of the entire third data is sent through the first transmission reception point, and the modulated symbol of the first data or the second data is sent through the second transmission reception point. For example, the scheduling information may carry a scheme indication field, where the scheme indication field includes an index or a number of the to-be-used repeated transmission scheme. The receiving device may determine the to-be-used repeated transmission based on the scheduling information, to accordingly determine a manner of processing modulated symbols received through different transmission reception points. For the manner in which the receiving device processes the modulated symbols from the different transmission reception points, refer to the foregoing descriptions. Details are not described herein again.

(3) S102 in the condition 3

In the condition 3, S102 may include: The sending device processes the first data by using the first modulation and coding scheme, and processes the second data by using the second modulation and coding scheme. Correspondingly, the receiving device may recover the first data by using the first modulation and coding scheme, and recover the second data by using the second modulation and coding scheme.

Optionally, the first modulation and coding scheme and the second modulation and coding scheme have a same modulation method but different code rates.

In a possible implementation, during initial transmission, the sending device may process the first data by using the first modulation and coding scheme, and process the second data by using the second modulation and coding scheme; and/or during at least one time of retransmission, the sending device processes the first data by using the first modulation and coding scheme, and processes the second data by using the second modulation and coding scheme.

Optionally, in the condition 3, the sending device may receive and/or send seventh information, where the seventh information may indicate the first modulation and coding scheme. In addition, the sending device may receive and/or send eighth information, where the eighth information may indicate the second modulation and coding scheme. The seventh information and the eighth information may be carried in a same message or same signaling. For example, the seventh information and the eighth information are used as different fields in same scheduling information. The seventh information and the eighth information may alternatively be carried in different scheduling information. The seventh information and the eighth information may alternatively be same information, for example, may be a common index of the first modulation and coding scheme and the second modulation and coding scheme. For example, in the MCS table shown in Table 2, the seventh information and the eighth information are the common index of the first modulation and coding scheme and the second modulation and coding scheme. According to this implementation, the sending device and the receiving device may negotiate or determine, by using the seventh information, to process the first data by using the first modulation and coding scheme and process the second data by using the second modulation and coding scheme, to improve a receiving success rate and reduce receiving overheads.

For example, in the downlink transmission, the network device serves as the sending device, and the terminal device serves as the receiving device. When the network device determines to process the first data by using the first modulation and coding scheme and process the second data by using the second modulation and coding scheme, the network device, namely, the sending device, may send the seventh information to the terminal device, namely, the receiving device, where the seventh information indicates the first modulation and coding scheme, indicates a correspondence between the first modulation and coding scheme and the first data, or indicates to process the first data by using the first modulation and coding scheme. Correspondingly, the terminal device may learn, based on the seventh information, that the first data is processed by using the first modulation and coding scheme. Similarly, the network device may send the eighth information to the receiving device, where the eighth information indicates the second modulation and coding scheme, indicates a correspondence between the second modulation and coding scheme and the second data, or indicates to process the second data by using the second modulation and coding scheme. Correspondingly, the receiving device may learn, based on the eighth information, that the second data is processed by using the second modulation and coding scheme.

For another example, in the uplink transmission, the terminal device serves as the sending device, and the network device serves as the receiving device. When the network device determines to process the first data by using the first modulation and coding scheme and process the second data by using the second modulation and coding scheme, the network device, namely, the receiving device, may send the seventh information to the terminal device, namely, the sending device, where the seventh information indicates the first modulation and coding scheme, indicates a correspondence between the first modulation and coding scheme and the first data, or indicates to process the first data by using the first modulation and coding scheme. Correspondingly, the sending device may learn, based on the seventh information, that the first data is to be processed by using the first modulation and coding scheme. Similarly, the receiving device may send the eighth information to the sending device, where the eighth information indicates the second modulation and coding scheme, indicates a correspondence between the second modulation and coding scheme and the second data, or indicates to process the second data by using the second modulation and coding scheme. Correspondingly, the receiving device may learn, based on the eighth information, that the second data is to be processed by using the second modulation and coding scheme.

In addition, it may alternatively be considered that the seventh information and/or the eighth information are/is indicated by the sending device to the receiving device (or by the receiving device to the sending device), regardless of which of the sending device and the receiving device is the network device.

Optionally, the seventh information and the eighth information may be carried in different information elements or fields in a same message or same signaling (for example, DCI), or may be carried in different messages or signaling. This is not specifically limited in this application.

In a possible implementation, the seventh information may indicate an MCS table to which the first modulation and coding scheme belongs and/or an index of the first modulation and coding scheme in the table, and the seventh may indicate an MCS table to which the second modulation and coding scheme belongs and/or an index of the second modulation and coding scheme in the table. For example, in the example shown in Table 1, the seventh information indicates one MCS in the MCS table shown in Table 1 as the first modulation and coding scheme, and the eighth information indicates another MCS in the MCS table shown in Table 1 as the second modulation and coding scheme.

In another possible implementation, for the MCS table shown in Table 2, the seventh information and the eighth information may be used as one index in the MCS table, and the index may indicate both the first modulation and coding scheme and the second modulation and coding scheme.

Based on the same concept, an embodiment of this application further provides a communication apparatus. The communication apparatus may include corresponding hardware structures and/or software modules for performing the functions described in the foregoing method. A person skilled in the art should be easily aware that, with reference to the units and method steps in the examples described in embodiments disclosed in this application, this application can be implemented by hardware or a combination of hardware and computer software. Whether a function is performed by hardware or hardware driven by computer software depends on particular application scenarios and design constraint conditions of the technical solutions.

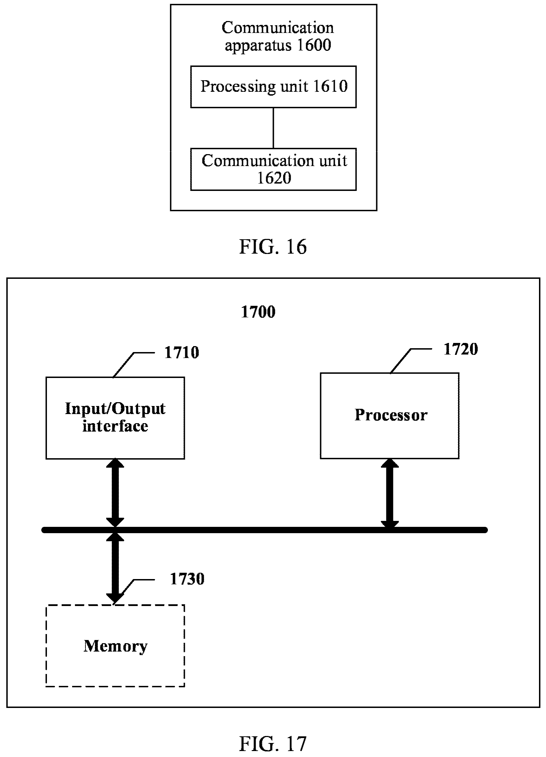

FIG. 16 to FIG. 18 each are a diagram of a structure of a possible communication apparatus according to an embodiment of this application. The communication apparatus may be configured to implement functions of the sending device and/or the receiving device in the foregoing method embodiment. Therefore, the beneficial effects in the foregoing method embodiment can also be achieved. In a possible implementation, the communication apparatus may be the terminal device or the network device shown in FIG. 1. For related details and effects, refer to the descriptions in the foregoing embodiment.

As shown in FIG. 16, the communication apparatus 1600 includes a processing unit 1610 and a communication unit 1620. The communication unit 1620 may implement a corresponding communication function, and the processing unit 1610 is configured to process data. The communication unit 1620 may alternatively be a transceiver unit, an input/output interface, or the like. The communication apparatus 1600 may be configured to implement functions of the sending device and/or the receiving device in the method embodiment shown in FIG. 12.

For example, when the functions of the sending device are implemented, the processing unit 1610 may obtain first data and second data, and the communication unit 1620 may be configured to send a modulated symbol of the first data, a modulated symbol of the second data, and a modulated symbol of third data.

Optionally, the communication unit 1620 may be further configured to send or receive at least one of the first information to the eighth information above.

Optionally, the processing unit 1610 may be further configured to determine a correspondence between data and a layer.

For another example, when the functions of the receiving device are implemented, the communication unit 1620 may be configured to receive a modulated symbol of first data and a modulated symbol of third data, and the processing unit 1610 may be configured to obtain the first data based on the modulated symbol of the first data, and obtain second data based on the modulated symbol of the third data and the first data.

Optionally, the communication unit 1620 may be further configured to send or receive at least one of the first information to the eighth information above.

For meanings of the foregoing technologies, refer to the descriptions in the method embodiment. Details are not described again.

It may be understood that in embodiments of this application, the division into modules is an example, and is merely logical function division. During actual implementation, there may be another division manner. In addition, functional modules in embodiments of this application may be integrated into one processor, each functional module may exist alone physically, or two or more modules may be integrated into one module. The integrated module may be implemented in a form of hardware, or may be implemented in a form of a software functional module.

FIG. 17 shows the communication apparatus 1700 according to an embodiment of this application. The communication apparatus 1700 is configured to implement the communication method provided in this application. The communication apparatus 1700 may be a communication apparatus to which the communication method is applied, may be a component in the communication apparatus, or may be an apparatus that can be used in collaboration with the communication apparatus. The communication apparatus 1700 may be a network device and/or a terminal apparatus. The communication apparatus 1700 may be a chip system or a chip. In this embodiment of this application, the chip system may include a chip, or may include a chip and another discrete component. The communication apparatus 1700 includes at least one processor 1720, configured to implement the communication method provided in embodiments of this application. The communication apparatus 1700 may further include an input/output interface 1710, and the input/output interface may include an input interface and/or an output interface. In this embodiment of this application, the input/output interface 1710 may be configured to communicate with another apparatus via a transmission medium, and a function of the input/output interface 1710 may include sending and/or receiving. For example, when the communication apparatus 1700 is the chip, the communication apparatus 1700 performs transmission with another chip or component through the input/output interface 1710. The processor 1720 may be configured to implement the method described in the foregoing method embodiment.

For example, the processor 1720 may be configured to perform the actions performed by the processing unit 1610, and the input/output interface 1710 may be configured to perform the actions performed by the communication unit 1620. Details are not described again.

Optionally, the communication apparatus 1700 may further include at least one memory 1730, configured to store program instructions and/or data. The memory 1730 is coupled to the processor 1720. The coupling in embodiments of this application may be an indirect coupling or a communication connection between apparatuses, units, or modules in an electrical form, a mechanical form, or another form, and is for information exchange between the apparatuses, the units, or the modules. The processor 1720 may collaborate with the memory 1730. The processor 1720 may execute the program instructions stored in the memory 1730. At least one of the at least one memory may be integrated with the processor.

In this embodiment of this application, the memory 1730 may be a non-volatile memory, such as a hard disk drive (hard disk drive, HDD) or a solid-state drive (solid-state drive, SSD), or may be a volatile memory (volatile memory), such as a random access memory (random access memory, RAM). The memory is any other medium that can carry or store expected program code in a form of an instruction or a data structure and that can be accessed by a computer, but is not limited thereto. The memory in this embodiment of this application may alternatively be a circuit or any other apparatus that can implement a storage function, and is configured to store program instructions and/or data.

In this embodiment of this application, the processor 1720 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by a combination of hardware in the processor and a software module.

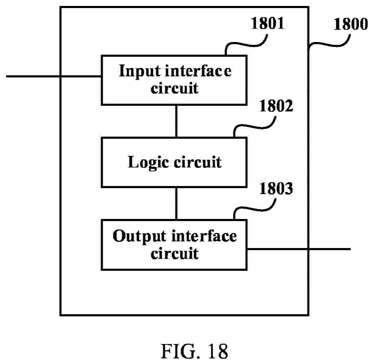

FIG. 18 shows the communication apparatus 1800 according to an embodiment of this application. The communication apparatus 1800 is configured to implement the communication method provided in this application. The communication apparatus 1800 may be a communication apparatus to which the communication method in embodiments of this application is applied, may be a component in the communication apparatus, or may be an apparatus that can be used in collaboration with the communication apparatus. The communication apparatus 1800 may be a network device and/or a terminal apparatus. The communication apparatus 1800 may be a chip system or a chip. In this embodiment of this application, the chip system may include a chip, or may include a chip and another discrete component. A part or all of the communication method provided in the foregoing embodiment may be implemented by hardware or software. When the communication method is implemented by hardware, the communication apparatus 1800 may include an input interface circuit 1801, a logic circuit 1802, and an output interface circuit 1803.

Optionally, for example, the apparatus is configured to implement functions of a receiving end. The input interface circuit 1801 may be configured to perform the receiving action performed by the communication unit 1620, the output interface circuit 1803 may be configured to perform the sending action performed by the communication unit 1620, and the logic circuit 1802 may be configured to perform the action performed by the processing unit 1610. Details are not described again.

Optionally, during specific implementation, the communication apparatus 1800 may be a chip or an integrated circuit.

Some or all of operations and functions performed by the communication apparatus described in the foregoing method embodiment of this application may be implemented by the chip or the integrated circuit.

An embodiment of this application provides a computer-readable storage medium storing a computer program. The computer program includes instructions for performing the foregoing method embodiment.

An embodiment of this application provides a computer program product including instructions. When the computer program product runs on a computer, the computer is enabled to perform the foregoing method embodiment.

An embodiment of this application provides a communication system, including at least one terminal apparatus and a network device. The at least one terminal apparatus may perform actions of the first terminal apparatus and/or the second terminal apparatus in this application. The network device may be configured to perform actions of the network device in the method shown in FIG. 2.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a special-purpose computer, a computer network, or other programmable apparatuses. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, through a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, an SSD), or the like.

It should be noted that a part of this patent application document includes copyright-protected content. Except for making copies of patent documents of the Patent Office or recorded content of patent documents, the copyright owner reserves the copyright.

The network device and the terminal device in the foregoing apparatus embodiments correspond to the network device or the terminal device in the method embodiment. A corresponding module or unit performs a corresponding step. For example, a communication unit (a transceiver) performs a receiving step or a sending step in the method embodiment, and a step other than the sending step and the receiving step may be performed by a processing unit (a processor). For a function of a specific unit, refer to the corresponding method embodiment. There may be one or more processors.

Terminologies such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated in figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system or a distributed system and/or across a network such as the Internet interacting with another system by using the signal).

A person of ordinary skill in the art may be aware that, illustrative logical blocks (illustrative logical blocks) and steps (steps) described in combination with embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiment is merely an example. For example, the division into units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. When functions are implemented in a form of a software functional unit and sold or used as an independent product, the functions may be stored in a computer-readable storage medium.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   obtaining first data and second data; and
   sending a modulated symbol of the first data, a modulated symbol of the second data, and a modulated symbol of third data, wherein the modulated symbol of the third data is obtained based on the first data and the second data, wherein
   the modulated symbol of the first data is mapped to a first layer, the modulated symbol of the second data corresponds to a second layer, the modulated symbol of the third data corresponds to the first layer and the second layer, and the first layer is different from the second layer;
   the modulated symbol of the first data corresponds to a first transmission reception point, the modulated symbol of the second data corresponds to a second transmission reception point, the modulated symbol of the third data corresponds to the first transmission reception point and/or the second transmission reception point, and the first transmission reception point is different from the second transmission reception point; or
   the first data corresponds to a first modulation and coding scheme, the second data corresponds to a second modulation and coding scheme, and the first modulation and coding scheme is different from the second modulation and coding scheme.

2. The method according to claim 1, wherein that the modulated symbol of the third data is obtained based on the first data and the second data comprises:
   the modulated symbol of the third data corresponds to at least one multiplexed modulation constellation diagram, and bits corresponding to each multiplexed modulation constellation diagram are from the first data and the second data.

3. The method according to claim 1 or 2, wherein the method further comprises:
   sending or receiving first information, wherein the first information indicates a correspondence between the modulated symbol of the first data and the first layer, and/or the first information indicates a correspondence between the modulated symbol of the second data and the second layer.

4. The method according to claim 3, wherein the method further comprises:
   sending second information, wherein the second information indicates a reliability order of a plurality of modulated symbol strings of the first data, and/or the second information indicates a reliability order of a plurality of modulated symbol strings of the second data.

5. The method according to any one of claims 1 to 4, wherein

   reliability of a first modulated symbol string is higher than reliability of a second modulated symbol string, and reliability of a layer corresponding to the first modulated symbol string is higher than or equal to reliability of a layer corresponding to the second modulated symbol string, wherein
   the first modulated symbol string and the second modulated symbol string meet at least one of the following:

      the first data comprises a bit corresponding to the first modulated symbol string, and the second data comprises a bit corresponding to the second modulated symbol string;
      the first data comprises a bit corresponding to the first modulated symbol string and at least one bit in a bit corresponding to the second modulated symbol string; or
      the second data comprises at least one bit in a bit corresponding to the first modulated symbol string and a bit corresponding to the second modulated symbol string.

6. The method according to claim 4 or 5, wherein the reliability of the modulated symbol string is determined based on at least one of the following:
   a column weight that is of a parity-check matrix of channel coding and that is for a bit corresponding to a modulated symbol, bit channel reliability of channel coding, or a bit error probability of channel coding.

7.  The method according to claim 5 or 6, wherein the reliability of the layer is determined based on channel quality of the layer.

8.  The method according to any one of claims 1 to 7, wherein reliability of the first layer is higher than reliability of the second layer, and/or an index of the first layer is less than an index of the second layer.

9.  The method according to any one of claims 1 to 8, wherein the first layer comprises at least one layer, and/or the second layer comprises at least one layer.

10. The method according to claim 1 or 2, wherein the method further comprises:
    sending or receiving third information, wherein the third information indicates that the modulated symbol of the third data corresponds to the first transmission reception point and the second transmission reception point.

11. The method according to claim 1 or 2, wherein the method further comprises:
    sending one of the modulated symbol of the first data and the modulated symbol of the second data, wherein the modulated symbol of the third data corresponds to the first transmission reception point, and the one of the modulated symbol of the first data and the modulated symbol of the second data corresponds to the second transmission reception point; or the modulated symbol of the third data corresponds to the second transmission reception point, and the one of the modulated symbol of the first data and the modulated symbol of the second data corresponds to the first transmission reception point.

12. The method according to claim 11, wherein the method further comprises:
    sending or receiving fourth information, wherein the fourth information indicates that the modulated symbol of the third data corresponds to the first transmission reception point, and the one of the modulated symbol of the first data and the modulated symbol of the second data corresponds to the second transmission reception point; or the fourth information indicates that the modulated symbol of the third data corresponds to the second transmission reception point, and the one of the modulated symbol of the first data and the modulated symbol of the second data corresponds to the first transmission reception point.

13. The method according to claim 11 or 12, wherein the method further comprises:

    sending or receiving fifth information, wherein the fifth information indicates a time domain resource and/or a frequency domain resource for one of the first data and the second data; and/or
    sending or receiving sixth information, wherein the sixth information indicates a time domain resource and/or a frequency domain resource for the third data.

14. The method according to claim 1 or 2, wherein the method further comprises:

    sending or receiving seventh information, wherein the seventh information indicates the first modulation and coding scheme; and/or
    sending or receiving eighth information, wherein the eighth information indicates the second modulation and coding scheme.

15. The method according to claim 14, wherein the seventh information comprises information about a modulation and coding scheme table and/or an index of the first modulation and coding scheme in the modulation and coding scheme table; and
    the eighth information comprises information about a modulation and coding scheme table and/or an index of the second modulation and coding scheme in the modulation and coding scheme table.

16. The method according to claim 14 or 15, wherein the first modulation and coding scheme and the second modulation and coding scheme belong to the same modulation and coding scheme table, and the index of the first modulation and coding scheme is different from the index of the second modulation and coding scheme; or
    the first modulation and coding scheme and the second modulation and coding scheme belong to the same modulation and coding scheme table, and the first modulation and coding scheme and the second modulation and coding scheme correspond to the same index.

17. A communication method, comprising:

receiving a modulated symbol of first data and a modulated symbol of third data, wherein the modulated symbol of the third data is obtained based on the first data and the second data;
obtaining the first data based on the modulated symbol of the first data; and
obtaining the second data based on the modulated symbol of the third data and the first data, wherein
the modulated symbol of the first data is mapped to a first layer, a modulated symbol of the second data corresponds to a second layer, the modulated symbol of the third data corresponds to the first layer and the second layer, and the first layer is different from the second layer;
the modulated symbol of the first data corresponds to a first transmission reception point, a modulated symbol of the second data corresponds to a second transmission reception point, the modulated symbol of the third data corresponds to the first transmission reception point and/or the second transmission reception point, and the first transmission reception point is different from the second transmission reception point; or
the first data corresponds to a first modulation and coding scheme, the second data corresponds to a second modulation and coding scheme, and the first modulation and coding scheme is different from the second modulation and coding scheme.

18. The method according to claim 17, wherein the method further comprises:

receiving the modulated symbol of the second data; and
determining that the modulated symbol of the second data fails to be demodulated and/or decoded.

19. The method according to claim 17 or 18, wherein that the modulated symbol of the third data is obtained based on the first data and the second data comprises:
the modulated symbol of the third data corresponds to at least one multiplexed modulation constellation diagram, and bits corresponding to each multiplexed modulation constellation diagram are from the first data and the second data.

20. The method according to any one of claims 17 to 19, wherein the method further comprises:
receiving or sending first information, wherein the first information indicates a correspondence between the modulated symbol of the first data and the first layer, and/or the first information indicates a correspondence between the modulated symbol of the second data and the second layer.

21. The method according to any one of claims 17 to 20, wherein the method further comprises:
sending second information, wherein the second information indicates a reliability order of a plurality of modulated symbols of the first data, and/or the second information indicates a reliability order of a plurality of modulated symbols of the second data.

22. The method according to any one of claims 17 to 21, wherein

reliability of a first modulated symbol string is higher than reliability of a second modulated symbol string, and reliability of a layer corresponding to the first modulated symbol string is higher than or equal to reliability of a layer corresponding to the second modulated symbol string, wherein
the first modulated symbol string and the second modulated symbol string meet at least one of the following:

the first data comprises a bit corresponding to the first modulated symbol string, and the second data comprises a bit corresponding to the second modulated symbol string;
the first data comprises a bit corresponding to the first modulated symbol string and at least one bit in a bit corresponding to the second modulated symbol string; or
the second data comprises at least one bit in a bit corresponding to the first modulated symbol string and a bit corresponding to the second modulated symbol string.

23. The method according to claim 21 or 22, wherein the reliability of the modulated symbol string is determined based on at least one of the following:
a column weight that is of a parity-check matrix of channel coding and that is for a bit corresponding to a modulated symbol, bit channel reliability of channel coding, or a bit error probability of coding.

24. The method according to claim 22 or 23, wherein the reliability of the layer is determined based on channel quality of the layer.

25. The method according to any one of claims 20 to 24, wherein reliability of the first layer is higher than reliability of the second layer, and/or an index of the first layer is less than an index of the second layer.

26. The method according to any one of claims 17 to 25, wherein the first layer comprises at least one layer, and/or the second layer comprises at least one layer.

27. The method according to any one of claims 17 to 19, wherein the method further comprises:
receiving or sending third information, wherein the third information indicates that the third data corresponds to the first transmission reception point and the second transmission reception point.

28. The method according to claim 27, wherein the method further comprises:
receiving one of the first data and the second data, wherein the third data corresponds to the first transmission reception point, and the one of the first data and the second data corresponds to the second transmission reception point; or the third data corresponds to the second transmission reception point, and the one of the first data and the second data corresponds to the first transmission reception point.

29. The method according to claim 28, wherein the method further comprises:
receiving or sending fourth information, wherein the fourth information indicates that the third data corresponds to the first transmission reception point, and the one of the first data and the second data corresponds to the second transmission reception point; or the fourth information indicates that the third data corresponds to the second transmission reception point, and the one of the first data and the second data corresponds to the first transmission reception point.

30. The method according to claim 28 or 29, wherein the method further comprises:

receiving or sending fifth information, wherein the fifth information indicates a time domain resource and/or a frequency domain resource for the one of the first data and the second data; and/or
receiving or sending sixth information, wherein the sixth information indicates a time domain resource and/or a frequency domain resource for the third data.

31. The method according to any one of claims 17 to 19, wherein the method further comprises:

receiving or sending seventh information, wherein the seventh information indicates the first modulation and coding scheme; and/or
receiving or sending eighth information, wherein the eighth information indicates the second modulation and coding scheme.

32. The method according to claim 31, wherein the seventh information comprises information about a modulation and coding scheme table and/or an index of the first modulation and coding scheme in the modulation and coding scheme table; and
the eighth information comprises information about a modulation and coding scheme table and/or an index of the second modulation and coding scheme in the modulation and coding scheme table.

33. The method according to claim 31 or 32, wherein the first modulation and coding scheme and the second modulation and coding scheme belong to the same modulation and coding scheme table, and the index of the first modulation and coding scheme is different from the index of the second modulation and coding scheme; or
the first modulation and coding scheme and the second modulation and coding scheme belong to the same modulation and coding scheme table, and the first modulation and coding scheme and the second modulation and coding scheme correspond to the same index.

34. A communication apparatus, comprising a processing unit and a communication unit, wherein

the processing unit is configured to obtain first data and second data; and
the communication unit is configured to send a modulated symbol of the first data, a modulated symbol of the second data, and a modulated symbol of third data, wherein the modulated symbol of the third data is obtained based on the first data and the second data, wherein
the modulated symbol of the first data is mapped to a first layer, the modulated symbol of the second data corresponds to a second layer, the modulated symbol of the third data corresponds to the first layer and the second layer, and the first layer is different from the second layer;

the modulated symbol of the first data corresponds to a first transmission reception point, the modulated symbol of the second data corresponds to a second transmission reception point, the modulated symbol of the third data corresponds to the first transmission reception point and/or the second transmission reception point, and the first transmission reception point is different from the second transmission reception point; or

the first data corresponds to a first modulation and coding scheme, the second data corresponds to a second modulation and coding scheme, and the first modulation and coding scheme is different from the second modulation and coding scheme.

35. The apparatus according to claim 34, wherein that the modulated symbol of the third data is obtained based on the first data and the second data comprises:

the modulated symbol of the third data corresponds to at least one multiplexed modulation constellation diagram, and bits corresponding to each multiplexed modulation constellation diagram are from the first data and the second data.

36. The apparatus according to claim 34 or 35, wherein the communication unit is further configured to:

send or receive first information, wherein the first information indicates a correspondence between the modulated symbol of the first data and the first layer, and/or the first information indicates a correspondence between the modulated symbol of the second data and the second layer.

37. The apparatus according to claim 36, wherein the communication unit is further configured to:

send second information, wherein the second information indicates a reliability order of a plurality of modulated symbol strings of the first data, and/or the second information indicates a reliability order of a plurality of modulated symbol strings of the second data.

38. The apparatus according to any one of claims 34 to 37, wherein

reliability of a first modulated symbol string is higher than reliability of a second modulated symbol string, and reliability of a layer corresponding to the first modulated symbol string is higher than or equal to reliability of a layer corresponding to the second modulated symbol string, wherein

the first modulated symbol string and the second modulated symbol string meet at least one of the following:

the first data comprises a bit corresponding to the first modulated symbol string, and the second data comprises a bit corresponding to the second modulated symbol string;

the first data comprises a bit corresponding to the first modulated symbol string and at least one bit in a bit corresponding to the second modulated symbol string; or

the second data comprises at least one bit in a bit corresponding to the first modulated symbol string and a bit corresponding to the second modulated symbol string.

39. The apparatus according to claim 37 or 38, wherein the reliability of the modulated symbol string is determined based on at least one of the following:

a column weight that is of a parity-check matrix of channel coding and that is for a bit corresponding to a modulated symbol, bit channel reliability of channel coding, or a bit error probability of channel coding.

40. The apparatus according to claim 38 or 39, wherein the reliability of the layer is determined based on channel quality of the layer.

41. The apparatus according to any one of claims 34 to 40, wherein reliability of the first layer is higher than reliability of the second layer, and/or an index of the first layer is less than an index of the second layer.

42. The apparatus according to any one of claims 34 to 41, wherein the first layer comprises at least one layer, and/or the second layer comprises at least one layer.

43. The apparatus according to claim 34 or 35, wherein the communication unit is further configured to:

send or receive third information, wherein the third information indicates that the modulated symbol of the third data corresponds to the first transmission reception point and the second transmission reception point.

44. The apparatus according to claim 34 or 35, wherein the communication unit is further configured to:

send one of the modulated symbol of the first data and the modulated symbol of the second data, wherein the modulated symbol of the third data corresponds to the first transmission reception point, and the one of the modulated symbol of the first data and the modulated symbol of the second data corresponds to the second transmission reception point; or the modulated symbol of the third data corresponds to the second transmission reception point, and the one of the modulated symbol of the first data and the modulated symbol of the second data corresponds to the first transmission reception point.

45. The apparatus according to claim 44, wherein the communication unit is further configured to:
send or receive fourth information, wherein the fourth information indicates that the modulated symbol of the third data corresponds to the first transmission reception point, and the one of the modulated symbol of the first data and the modulated symbol of the second data corresponds to the second transmission reception point; or the fourth information indicates that the modulated symbol of the third data corresponds to the second transmission reception point, and the one of the modulated symbol of the first data and the modulated symbol of the second data corresponds to the first transmission reception point.

46. The apparatus according to claim 44 or 45, wherein the communication unit is further configured to:

send or receive fifth information, wherein the fifth information indicates a time domain resource and/or a frequency domain resource for one of the first data and the second data; and/or
send or receive sixth information, wherein the sixth information indicates a time domain resource and/or a frequency domain resource for the third data.

47. The apparatus according to claim 34 or 35, wherein the communication unit is further configured to:

send or receive seventh information, wherein the seventh information indicates the first modulation and coding scheme; and/or
send or receive eighth information, wherein the eighth information indicates the second modulation and coding scheme.

48. The apparatus according to claim 47, wherein the seventh information comprises information about a modulation and coding scheme table and/or an index of the first modulation and coding scheme in the modulation and coding scheme table; and
the eighth information comprises information about a modulation and coding scheme table and/or an index of the second modulation and coding scheme in the modulation and coding scheme table.

49. The apparatus according to claim 47 or 48, wherein the first modulation and coding scheme and the second modulation and coding scheme belong to the same modulation and coding scheme table, and the index of the first modulation and coding scheme is different from the index of the second modulation and coding scheme; or
the first modulation and coding scheme and the second modulation and coding scheme belong to the same modulation and coding scheme table, and the first modulation and coding scheme and the second modulation and coding scheme correspond to the same index.

50. A communication apparatus, comprising:

a communication unit, configured to receive a modulated symbol of first data and a modulated symbol of third data, wherein the modulated symbol of the third data is obtained based on the first data and the second data; and
a processing unit, configured to obtain the first data based on the modulated symbol of the first data, and obtain the second data based on the modulated symbol of the third data and the first data, wherein
the modulated symbol of the first data is mapped to a first layer, a modulated symbol of the second data corresponds to a second layer, the modulated symbol of the third data corresponds to the first layer and the second layer, and the first layer is different from the second layer;
the modulated symbol of the first data corresponds to a first transmission reception point, a modulated symbol of the second data corresponds to a second transmission reception point, the modulated symbol of the third data corresponds to the first transmission reception point and/or the second transmission reception point, and the first transmission reception point is different from the second transmission reception point; or
the first data corresponds to a first modulation and coding scheme, the second data corresponds to a second modulation and coding scheme, and the first modulation and coding scheme is different from the second modulation and coding scheme.

51. The apparatus according to claim 50, wherein the communication unit is further configured to:

> receive the modulated symbol of the second data; and
> determine that the modulated symbol of the second data fails to be demodulated and/or decoded.

52. The apparatus according to claim 50 or 51, wherein that the modulated symbol of the third data is obtained based on the first data and the second data comprises:
the modulated symbol of the third data corresponds to at least one multiplexed modulation constellation diagram, and bits corresponding to each multiplexed modulation constellation diagram are from the first data and the second data.

53. The apparatus according to any one of claims 50 to 52, wherein the communication unit is further configured to:
receive or send first information, wherein the first information indicates a correspondence between the modulated symbol of the first data and the first layer, and/or the first information indicates a correspondence between the modulated symbol of the second data and the second layer.

54. The apparatus according to any one of claims 50 to 53, wherein the communication unit is further configured to:
send second information, wherein the second information indicates a reliability order of a plurality of modulated symbols of the first data, and/or the second information indicates a reliability order of a plurality of modulated symbols of the second data.

55. The apparatus according to any one of claims 50 to 54, wherein

> reliability of a first modulated symbol string is higher than reliability of a second modulated symbol string, and reliability of a layer corresponding to the first modulated symbol string is higher than or equal to reliability of a layer corresponding to the second modulated symbol string, wherein
> the first modulated symbol string and the second modulated symbol string meet at least one of the following:
>
> > the first data comprises a bit corresponding to the first modulated symbol string, and the second data comprises a bit corresponding to the second modulated symbol string;
> > the first data comprises a bit corresponding to the first modulated symbol string and at least one bit in a bit corresponding to the second modulated symbol string; or
> > the second data comprises at least one bit in a bit corresponding to the first modulated symbol string and a bit corresponding to the second modulated symbol string.

56. The apparatus according to claim 54 or 55, wherein the reliability of the modulated symbol string is determined based on at least one of the following:
a column weight that is of a parity-check matrix of channel coding and that is for a bit corresponding to a modulated symbol, bit channel reliability of channel coding, or a bit error probability of coding.

57. The apparatus according to claim 55 or 56, wherein the reliability of the layer is determined based on channel quality of the layer.

58. The apparatus according to any one of claims 53 to 57, wherein reliability of the first layer is higher than reliability of the second layer, and/or an index of the first layer is less than an index of the second layer.

59. The apparatus according to any one of claims 50 to 58, wherein the first layer comprises at least one layer, and/or the second layer comprises at least one layer.

60. The apparatus according to any one of claims 50 to 52, wherein the communication unit is further configured to:
receive or send third information, wherein the third information indicates that the third data corresponds to the first transmission reception point and the second transmission reception point.

61. The apparatus according to claim 60, wherein the communication unit is further configured to:
receive one of the first data and the second data, wherein the third data corresponds to the first transmission reception point, and the one of the first data and the second data corresponds to the second transmission reception point; or the third data corresponds to the second transmission reception point, and the one of the first data and the second data corresponds to the first transmission reception point.

62. The apparatus according to claim 61, wherein the communication unit is further configured to:
receive or send fourth information, wherein the fourth information indicates that the third data corresponds to the first transmission reception point, and the one of the first data and the second data corresponds to the second transmission reception point; or the fourth information indicates that the third data corresponds to the second transmission reception point, and the one of the first data and the second data corresponds to the first transmission reception point.

63. The apparatus according to claim 61 or 62, wherein the communication unit is further configured to:

receive or send fifth information, wherein the fifth information indicates a time domain resource and/or a frequency domain resource for the one of the first data and the second data; and/or
receive or send sixth information, wherein the sixth information indicates a time domain resource and/or a frequency domain resource for the third data.

64. The apparatus according to any one of claims 50 to 52, wherein the communication unit is further configured to:

receive or send seventh information, wherein the seventh information indicates the first modulation and coding scheme; and/or
receive or send eighth information, wherein the eighth information indicates the second modulation and coding scheme.

65. The apparatus according to claim 64, wherein the seventh information comprises information about a modulation and coding scheme table and/or an index of the first modulation and coding scheme in the modulation and coding scheme table; and
the eighth information comprises information about a modulation and coding scheme table and/or an index of the second modulation and coding scheme in the modulation and coding scheme table.

66. The apparatus according to claim 64 or 65, wherein the first modulation and coding scheme and the second modulation and coding scheme belong to the same modulation and coding scheme table, and the index of the first modulation and coding scheme is different from the index of the second modulation and coding scheme; or
the first modulation and coding scheme and the second modulation and coding scheme belong to the same modulation and coding scheme table, and the first modulation and coding scheme and the second modulation and coding scheme correspond to the same index.

67. A communication apparatus, comprising a processor, wherein the processor is configured to execute a computer program or instructions, to implement the method according to any one of claims 1 to 33.

68. The apparatus according to claim 67, further comprising a memory and/or a transceiver, wherein the memory is configured to store the computer program or the instructions, and the transceiver is used by the apparatus to perform communication.

69. A communication apparatus, comprising a module configured to perform the method according to any one of claims 1 to 33.

70. A computer-readable storage medium, wherein the storage medium stores a computer program or instructions; and when the computer program or the instructions are executed by a communication apparatus, the method according to any one of claims 1 to 33 is implemented.

71. A computer program product, comprising a computer program or instructions, wherein when the computer program or the instructions are executed by a computer, the computer is enabled to perform the method according to any one of claims 1 to 33.

72. A communication system, comprising a communication apparatus configured to perform the method according to any one of claims 1 to 16 and a communication apparatus configured to perform the method according to any one of claims 17 to 33.

73. A chip, wherein the chip is coupled to a memory, and the chip reads a computer program stored in the memory, to perform the method according to any one of claims 1 to 33.

**74.** A communication apparatus, configured to perform the method according to any one of claims 1 to 33.

EP 4 668 635 A1

FIG. 1

FIG. 2

FIG. 3

Q channel

S₁S₂S₃S₄

| 0010 | 0011 | 0001 | 0000 |
|------|------|------|------|

●          ●      ┼ 3A  ●           ●

| 0110 | 0111 | 0101 | 0100 |
|------|------|------|------|

●          ●      ┼ A   ●           ●

−3A        −A        A        3A

─────────────────┼──────────┼──────────┼──────► I channel

| 1110 | 1111 | 1101 | 1100 |
|------|------|------|------|

●          ●      ┼ −A  ●           ●

| 1010 | 1011 | 1001 | 1000 |
|------|------|------|------|

●          ●      ┼ −3A ●           ●

FIG. 4

| X1 | | X1 | X1 | X1 |

──────────────────────────────────────────────►

Initially              1st time of blind  2nd time of blind  3rd time of blind  t
transmitted data       retransmission     retransmission     retransmission

FIG. 5

| Data packet 1 | Data packet 2 | | Data packet 1 | Data packet 2 |

──────────────────────────────────────────────►

Initially                          1st time of blind                  t
transmitted data                   retransmission

FIG. 6

**Data packet 1**

**Combined
data packet**

**Data packet 2**

t

FIG. 7

| 15 | 6 | | 13 | 4 |
| 2 | 9 | | 0 | 11 |
| | | | | |
| 5 | 12 | | 7 | 14 |
| 8 | 3 | | 10 | 1 |

FIG. 8

| 1111 | 0110 | | 1101 | 0100 |
| 0010 | 1001 | | 0000 | 1011 |
| | | | | |
| 0101 | 1100 | | 0111 | 1110 |
| 1000 | 0011 | | 1010 | 0001 |

FIG. 9

FIG. 10

FIG. 11

FIG. 12

FIG. 13

Layer 1 ▮

Layer 1 ▯

a

Layer 1 ▮

Layer 2 ▮▯

Layer 3 ▯

b

▮ CB 1

▯ CB 2

FIG. 14

First transmission reception point

Second transmission reception point

First transmission reception point

Second transmission reception point

Modulated symbol of a part of data in third data

Modulated symbol of the other part of data in the third data

Modulated symbol of third data

Modulated symbol of first data or modulated symbol of second data

Receiving device

a

Receiving device

b

FIG. 15

Communication
apparatus 1600

Processing unit 1610

Communication unit
1620

FIG. 16

1700

1710

Input/Output
interface

1720

Processor

1730

Memory

FIG. 17

1801

1800

Input interface
circuit

1802

Logic circuit

1803

Output interface
circuit

FIG. 18

## INTERNATIONAL SEARCH REPORT

| International application No. |
|---|
| **PCT/CN2023/086959** |

**A. CLASSIFICATION OF SUBJECT MATTER**

H04L1/1867(2023.01)i

According to International Patent Classification (IPC) or to both national classification and IPC

**B. FIELDS SEARCHED**

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNTXT, WPABSC, ENTXTC, VEN, CNKI, IEEE, 3GPP: 物理上行链路共享信道, 物理上行共享信道, 重传, 调制, 解调, 星座图, 层, 传输块, 码字, 码块, 码块组, 多输入多输出, 调制与编码, PUSCH, retransmission, repetition, repetitive, modulation, demodulation, PAM, QAM, PSK, layer, TB, CW, CB, CBG, MIMO, MCS

**C. DOCUMENTS CONSIDERED TO BE RELEVANT**

| Category* | Citation of document, with indication, where appropriate, of the relevant passages | Relevant to claim No. |
|---|---|---|
| Y | CN 114189318 A (HUAWEI TECHNOLOGIES CO., LTD.) 15 March 2022 (2022-03-15) description, paragraphs [0093]-[0172], and figures 2-8 | 1-74 |
| Y | CN 111447048 A (HUAWEI TECHNOLOGIES CO., LTD.) 24 July 2020 (2020-07-24) description, paragraphs [0048]-[0206], and figures 1-8 | 1-74 |
| Y | US 2021351889 A1 (QUALCOMM INCORPORATED) 11 November 2021 (2021-11-11) description, paragraphs [0023]-[0032] | 1-74 |
| A | CN 109120389 A (SHENZHEN GIONEE COMMUNICATION EQUIPMENT CO., LTD.) 01 January 2019 (2019-01-01) entire document | 1-74 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 November 2023** | **05 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/086959**

| Patent document cited in search report | | | Publication date (day/month/year) | Patent family member(s) | | | Publication date (day/month/year) |
|---|---|---|---|---|---|---|---|
| CN | 114189318 | A | 15 March 2022 | WO | 2022057568 | A1 | 24 March 2022 |
| | | | | US | 2023224083 | A1 | 13 July 2023 |
| CN | 111447048 | A | 24 July 2020 | WO | 2018171474 | A1 | 27 September 2018 |
| | | | | US | 2020028618 | A1 | 23 January 2020 |
| | | | | EP | 3585022 | A1 | 25 December 2019 |
| | | | | CN | 108632192 | A | 09 October 2018 |
| US | 2021351889 | A1 | 11 November 2021 | None | | | |
| CN | 109120389 | A | 01 January 2019 | None | | | |

Form PCT/ISA/210 (patent family annex) (July 2022)